(19) Europäisches Patentamt
European Patent Office
Office européen des brevets

(11) **EP 2 137 915 B1**

(12) **EUROPÄISCHE PATENTSCHRIFT**

(45) Veröffentlichungstag und Bekanntmachung des Hinweises auf die Patenterteilung:
**22.12.2010   Patentblatt 2010/51**

(21) Anmeldenummer: **08734861.1**

(22) Anmeldetag: **28.03.2008**

(51) Int Cl.:
*H04L 25/03* *(2006.01)*

(86) Internationale Anmeldenummer:
**PCT/EP2008/002489**

(87) Internationale Veröffentlichungsnummer:
**WO 2008/125205 (23.10.2008 Gazette 2008/43)**

(54) **VERFAHREN UND ENTZERRER ZUR DETEKTION VON ÜBER EINEN ZEITVERÄNDERLICHEN ÜBERTRAGUNGSKANAL ÜBERTRAGENEN DATENSYMBOL-SEQUENZEN**

METHOD AND EQUALIZER FOR DETECTING DATA SYMBOL SEQUENCES TRANSMITTED VIA A TIME-VARIABLE TRANSMISSION CHANNEL

PROCEDE ET EGALISEUR DESTINES A LA DETECTION DE SEQUENCES DE SYMBOLES DE DONNEES TRANSMISES AU MOYEN D'UN CANAL DE TRANSMISSION VARIABLE DANS LE TEMPS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **17.04.2007   DE 102007018094**
**20.08.2007   DE 102007039159**
**26.11.2007   DE 102007056726**

(43) Veröffentlichungstag der Anmeldung:
**30.12.2009   Patentblatt 2009/53**

(73) Patentinhaber: **Rohde & Schwarz GmbH & Co. KG**
**81671 München (DE)**

(72) Erfinder: **DETERT, Thorben**
**80634 München (DE)**

(74) Vertreter: **Körfer, Thomas**
**Mitscherlich & Partner**
**Patent- und Rechtsanwälte**
**Postfach 33 06 09**
**80066 München (DE)**

(56) Entgegenhaltungen:
• **DETERT T ET AL: "An Improved Joint M-Algorithm for Single Antenna Interference Cancellation in TDMA Mobile Radio" COMMUNICATIONS, 2007. ICC '07. IEEE INTERNATIONAL CONFERENCE ON, IEEE, PI, 24. Juni 2007 (2007-06-24), - 28. Juni 2007 (2007-06-28) Seiten 6018-6025, XP031126630 ISBN: 978-1-4244-0353-0**
• **ISABELLA DE BROECK: "Interleaved Frequency-Division Multiple-Access" INTERNET CITATION, [Online] XP002424443 Gefunden im Internet: URL:http://elib.tu-darmstadt.de/diss/00052 5/> [gefunden am 2007-03-13]**

**Beschreibung**

Die Erfindung betrifft ein Verfahren und einen Entzerrer zur Detektion von über einen zeitveränderlichen Übertragungskanal übertragenen Datensymbol-Sequenzen mit reduziertem Signalverarbeitungsaufwand.

Störungen in Empfangssignalen in einem realen Übertragungskanal - beispielsweise in einem Mobilfunknetz - können u.a. durch Intersymbol-Interferenzen, durch die Überlagerung von unterschiedlichen Sendesignalen, die von mehreren sendenden Mobilfunkgeräten aus benachbarten Zellen im gleichen Frequenzband (Gleichkanalstörer) oder aus unterschiedlichen Frequenzbändern (Nebenkanalstörer) resultieren, oder durch die Überlagerung von identischen Sendesignalen, die von einem einzigen Nutzer über unterschiedliche Sender abgestrahlt werden - sendeseitige Diversität bei Space-Time-Codierung oder Verzögerungen generierende Diversität -, entstehen.

Ein gestörtes Empfangssignal, das nach der Demodulation als verzerrte Datensymbol-Sequenz vorliegt, muss in einem Entzerrer in mehrere den einzelnen gesendeten Datensymbol-Sequenzen entsprechende Datenströme überführt werden. Eine wichtige Gruppe von Detektions- bzw. Entzerrungsverfahren stellen die Maximum-Likelihood-Verfahren dar, bei denen die gestörte empfangene Datensymbol-Sequenz mit allen möglichen ungestörten Datensymbol-Sequenzen aus einem bei der Modulation verwendeten Datensymbolalphabet verglichen wird und diejenige ungestörte Datensymbol-Sequenz als Schätzung für die gesendete Datensymbol-Sequenz ausgewählt wird, die eine minimale euklidische Distanz zur gestörten empfangenen Datensymbol-Sequenz aufweist.

Die Komplexität der Schätzung der einzelnen Datensymbol-Sequenzen im Entzerrer ist von der Mächtigkeit des verwendeten Symbolalphabets und vom Ausmaß an Interferenzen abhängig. Die Kombinationsvielfalt von möglichen Datensymbol-Sequenzen wird in einem Zustandsdiagramm - bevorzugt einem Trellis-Diagramm - mittels in der Schätzung auszuwählender Zustände dargestellt. Die Auswahl der Folge von aufeinanderfolgenden Zuständen aus der Vielzahl von Zustandsfolgen wird beim üblicherweise eingesetzten Viterbi-Algorithmus durch Auswahl eines oder mehrerer sog. Überlebenspfade optimiert.

Aufgrund der Zeitveränderlichkeit des Übertragungskanals ist bei der Minimierung der euklidischen Distanz in jedem Zustandsübergang nicht nur das zum im aktuellen Zeitpunkt auszuwählenden Zustand gehörige Datensymbol, sondern auch die Impulsantwort des Übertragungskanals im aktuellen Zeitpunkt zu schätzen, was die Komplexität der Schätzung zusätzlich erhöht.

Die zu minimierende Pfadmetrik zur Auswahl der Zustände in den einzelnen Überlebenspfaden im aktuellen Zeitpunkt im Hinblick auf eine Schätzung der im aktuellen Zeitpunkt über die einzelnen Übertragungskanäle übertragenen Datensymbole und auch die Schätzung der zu den einzelnen Übertragungskanälen gehörigen Kanalimpulsantworten im aktuellen Zeitpunkt wird bei der nicht vorveröffentlichten älteren Patentanmeldung DE 10 2006 029 464.5 iterativ ermittelt.

Da aufgrund der Faltungsoperation bei der Ermittlung der Schätzung der jeweilig empfangenen Datensymbol-Sequenz in zukünftigen Zeitpunkten Schätzwerte für jeweilig gesendete Datensymbole und Kanalimpulsantworten im aktuellen bzw. in vorhergehenden Zeitpunkten eingehen, die im aktuellen Zeitpunkt bereits ermittelt sind, können diese in einem Erweiterungsterm berücksichtigt werden, der mit der iterativ berechneten Pfadmetrik eine erweiterte Pfadmetrik bildet.

Da zukünftig empfangene und gesendete Datensymbole zum aktuellen Zeitpunkt noch nicht bekannt sind, wird die erweiterte Metrik zum aktuellen Zeitpunkt als Erwartungswert der Differenzen zwischen den in zukünftigen Zeitpunkten empfangenen Datensymbolen und den mit der im aktuellen Zeitpunkt geschätzten Impulsantwort des jeweiligen Übertragungskanals gewichteten Datensymbolen der in zukünftigen Zeitpunkten gesendeten Datensymbol-Sequenzen ermittelt, wobei die Anzahl der zukünftigen Zeitpunkte der um den Faktor 1 reduzierten Impulslänge der jeweiligen Kanalimpulsantwort entspricht.

Auf diese Weise wird die volle Energie des zum aktuellen Zeitpunkt gesendeten Datensymbols bei der Schätzung der empfangenen Datensymbol-Sequenz zum aktuellen Zeitpunkt berücksichtigt und damit der Schätzfehler bei der Entzerrung einer empfangenen Datensymbol-Sequenz, die auf einem jeweiligen Übertragungskanal mit einer Kanalimpulsantwort mit einer Impulslänge größer als 1 übertragen wird, minimiert.

Nachteilig an der Einführung und Berechnung einer erweiterten Pfadmetrik bei der Schätzung der einzelnen Datensymbol-Sequenzen ist der vergleichsweise hohe numerische Signalverarbeitungsaufwand.

Aufgabe der Erfindung ist es deshalb, ein Verfahren zum Entzerren und einen Entzerrer derart weiterzuentwickeln, dass in jedem Zeitpunkt eine kombinierte Datensymbol- und Kanalimpulsantwort-Schätzung mittels Iteration bei niedrigem Signalverarbeitungsaufwand durchgeführt wird.

Die Aufgabe wird durch ein erfindungsgemäßes Verfahren zur Detektion von über einen zeitveränderlichen Übertragungskanal übertragenen Datensymbol-Sequenzen mit reduziertem Signalverarbeitungsaufwand mit den Merkmalen des Patentanspruchs 1 und einen zugehörigen erfindungsgemäßen Entzerrer mit den Merkmalen des Patentanspruchs 21 gelöst.

Beim erfindungsgemäßen Verfahren und beim erfindungsgemäßen Entzerrer werden bei der Ermittlung der erweiterten Pfadmetrik für die in zukünftigen Zeitpunkten gesendeten Datensymbole anstelle von Erwartungswerten Nullwerte angesetzt. Auf diese Weise reduziert sich die für die erweiterte Pfadmetrik zu berechnende mathematische Beziehung um den Term $\sum_{u=0}^{U} \sum_{n=0}^{\min(L_u, j-1)} \hat{h}_u(n)$ . In jedem Zeitpunkt ist folglich ein um die Berechnung dieses mathematischen Terms gegenüber der technischen Lehre der Anmeldung DE 10 2006 029 464.5 reduzierter Signalverarbeitungsaufwand durchzuführen.

Folgende vorteilhafte Erweiterungen des erfindungsgemäßen Verfahrens und der erfindungsgemäßen Vorrichtung sind in den abhängigen Ansprüchen aufgeführt:

Wie beim Viterbi-Algorithmus werden im aktuellen Zeitpunkt diejenigen Zustände im Trellis-Diagramm ausgewählt, die eine minimale Pfadmetrik aufweisen. In einer ersten Ausführungsform der Erfindung werden nur diejenigen Zustände bei der Auswahl mittels Minimierung der erweiterten Pfadmetrik berücksichtigt, die aus einem gemeinsamen Zustand im vorhergehenden Zeitpunkt hervorgehen, während in einer zweiten Ausführungsform der Erfindung alle Zustände im aktuellen Zeitpunkt, die aus allen Zuständen im vorhergehenden Zeitpunkt hervorgehen, bei der Auswahl der Zustände mittels Minimierung der erweiterten Pfadmetrik herangezogen werden.

Das erfindungsgemäße Verfahren kann nicht nur, wie soeben dargestellt, das Trellis-Diagramm zuerst "in der Breite" nach einer optimalen Schätzung für die jeweilig gesendete Datensymbol-Sequenz ("breadth-first"-Verfahren), sondern auch in einer weiteren Ausführungsform der Erfindung das Trellis-Diagramm zuerst "in der Tiefe" nach einer optimalen Schätzung für die jeweilig gesendete Datensymbol-Sequenz ("deepth-first"-Verfahren) in Anlehnung an den Stack-Algorithmus durchsuchen.

Bei der iterativen Berechnung der erweiterten Pfadmetrik eines Zustands im aktuellen Zeitpunkt wird zur erweiterten Pfadmetrik des Vorläuferzustands im vorher gehenden Zeitpunkt die zugehörige Zweigmetrik dazuaddiert, die sich aus dem Produk eines ersten und zweiten a-priori-Schätzfehlers ergibt. Der erste bzw. zweite a-priori-Schätzfehler wiederum ergibt sich aus der Differenz zwischen der bis zum aktuellen Zeitpunkt empfangenen Datensymbol-Sequenz und der Schätzung der mit einer zu einem ersten bzw. zweiten Zeitpunkt geschätzten Impulsantwort des jeweiligen Übertragungskanals gewichteten Schätzung der bis zum aktuellen Zeitpunkt gesendeten Datensymbol-Sequenz. Der erste und zweite Zeitpunkt ist jeweils ein unterschiedlicher Zeitpunkt vor dem aktuellen Zeitpunkt.

Anstelle des Produktes eines ersten und zweiten a-priori-Schätzfehlers kann auch das Produkt aus einem a-priori-Schätzfehler und einem a-posteriori-Schätzfehler zum Einsatz kommen. Hierbei ergibt sich der a-priori-Schätzfehler aus der Differenz zwischen der bis zum aktuellen Zeitpunkt empfangenen Datensymbol-Sequenz und der Schätzung der mit einer zum vorherigen Zeitpunkt geschätzten Impulsantwort des jeweiligen Übertragungskanals gewichteten Schätzung der bis zum aktuellen Zeitpunkt gesendeten Datensymbol-Sequenz und der a-posteriori-Schätzfehler aus der Differenz zwischen der bis zum aktuellen Zeitpunkt empfangenen Datensymbol-Sequenz und der Schätzung der mit einer zum aktuellen Zeitpunkt geschätzten Impulsantwort des jeweiligen Übertragungskanals gewichteten Schätzung der bis zum aktuellen Zeitpunkt gesendeten Datensymbol-Sequenz.

In weiteren Ausführungsformen der Erfindung können die Produkte aus dem ersten und zweiten a-priori-Schätzfehler bzw. die Produkte aus dem a-priori-Schätzfehler und dem a-posteriori-Schätzfehler einer Betragsbildungsfunktion, einer Realteilbildungsfunktion oder einer sonstigen Funktion zur Vereinfachung der Berechnungen der aus komplexen Zahlen bestehenden Größen unterworfen werden.

Durch Einführung eines Gewichtungsfaktors können bei der rekursiven Berechnung der erweiterten Pfadmetriken früher gesendete Datensymbole schwächer als später gesendete Datensymbole gewichtet werden.

Eine zusätzliche Reduzrerung des Signalverarbeitungsaufwands kann bei über mehreren Übertragungskanälen jeweils übertragenen Signalen, die deutlich unterschiedliche Signalleistungen aufweisen, erzielt werden. Da in diesem Fall die Datensymbol-Hypothesen der leistungsschwächeren Signale gegenüber den Datensymbol-Hypothesen der leistungsstärkeren Signale vernachlässigbar klein sind, sind sämtliche Datensymbolhypothesen der leistungsschwächeren Signale in Ralation zu jeder Datensymbolhypothese jedes leistungsstärkeren Signals im Hinblick auf eine Metrikminimierung näherungsweise gleichwertig. Falls man primär nur an der Schätzung der Datensymbole von leistungsstärkeren Signalen interessiert ist, führen diese gleichwertigen Datensymbolhypothesen der leistungsschwächeren Signale zu mehreren gleichwertigen Zuständen im Trellis-Diagramm und damit zu einer Weiterverfolgung von mehreren gleichwertigen "Überlebenspfaden". Um die Anzahl von "Überlebenspfaden" in einem derartigen Fall zu reduzieren, wird nicht jede Datensymbol-Hypothese, sondern lediglich eine reduzierte Anzahl von Datensymbol-Hypothesen für jedes leistungsschwächere Signal berücksichtigt. Je größer das Verhältnis der Signalleistung der leistungsstärkeren Signale zur Signalleistung der leistungsschwächeren Signale ist, desto niedriger ist die für jedes leistungsschwächere Signal zu berücksichtigende reduzierte Anzahl von Datensymbol-Hypothesen anzusetzen.

Die Schätzung der Kanalimpulsantwort des jeweiligen Übertragungskanals muss nicht zu jedem Zeitpunkt erfolgen. Bei einer sich langsam verändernden Kanalimpulsantwort des jeweiligen Übertragungskanals ist durchaus eine Schätzung in einem größeren Zeitraster möglich. Ändert sich die Kanalimpulsantwort des jeweiligen Übertragungskanals nur unwesentlich, so ist eine Kanalschätzung einzig zu Beginn der Übertragung ausreichend.

Die einzelnen Ausführungsformen des erfindungsgemäßen Verfahrens und des erfindungsgemäßen Entzerrers zur Detektion von über einen zeitveränderlichen Übertragungskanal übertragenen Datensymbol-Sequenzen mit reduziertem Signalverarbeitungsaufwand werden im folgenden anhand der Zeichnung im Detail erläutert. Die Figuren der Zeichnung zeigen:

Fig. 1  ein erstes Trellis-Diagramm zur Schätzung der Datensymbol-Sequenz nach dem erfindungs- gemäßen Verfahren,

Fig. 2  ein zweites Trellis-Diagramm zur Schätzung der Datensymbol-Sequenz nach dem erfindungs- gemäßen Verfahren,

Fig. 3  eine Übersichtsdarstellung von relevanten Termen zur Pfadmetrik-Berechnung in ver- schiedenen Zeitpunkten,

Fig. 4  ein Blockdiagramm des erfindungsgemäßen Übertragungssystems,

Fig. 5  ein Flussdiagramm der erfindungsgemäßen Verfahrens und

Fig. 6  eine Darstellung der Bitfehlerwahrschein- lichkeit in Abhängigkeit der Sendeleistung zweier Sender bei einem Verfahren nach dem Stand der Technik und dem erfindungsgemäßen Verfahren.

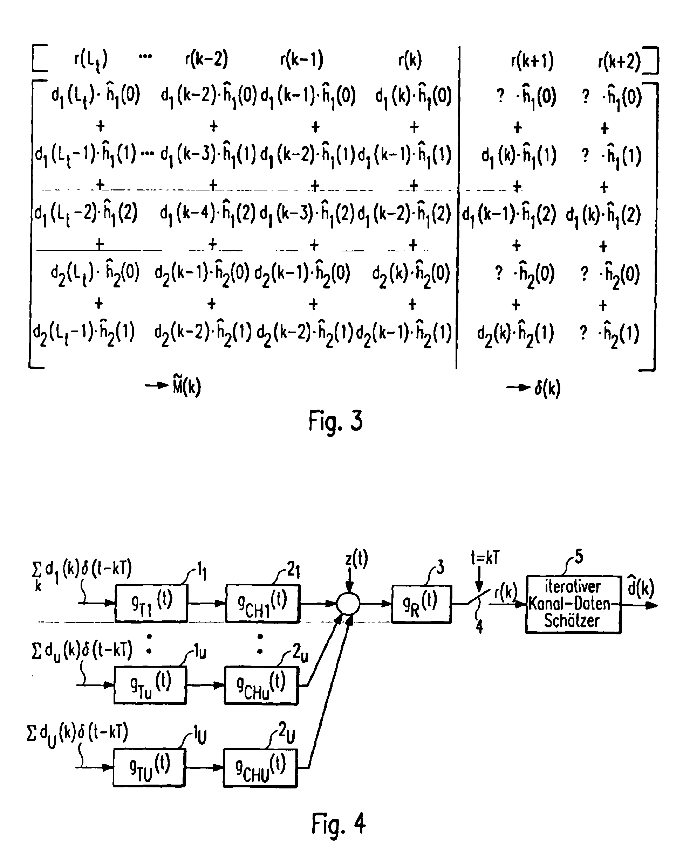

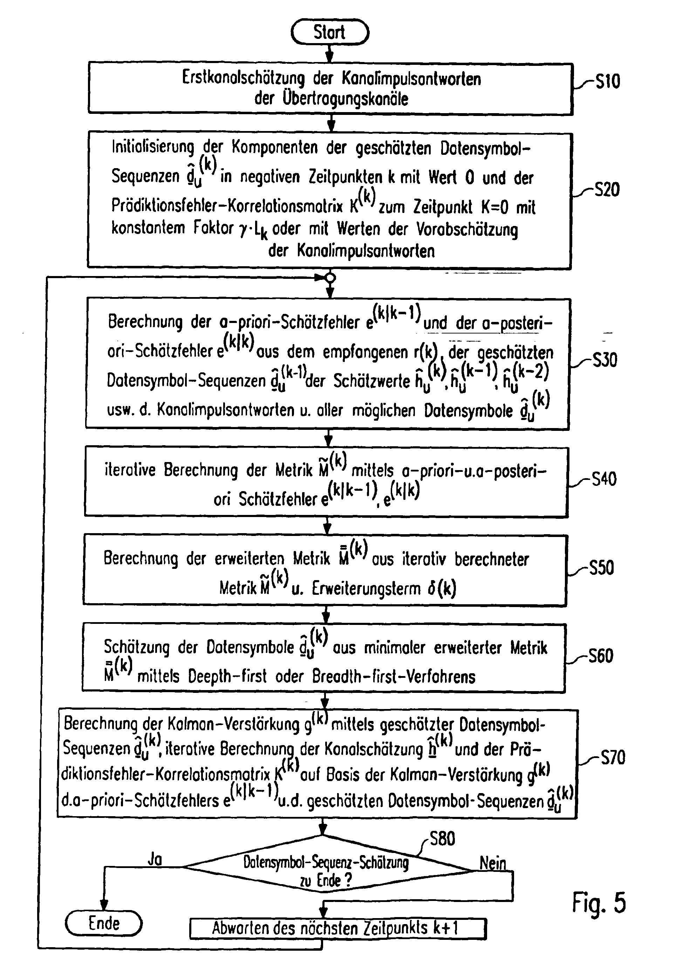

Bevor anhand der Fig. 4 und 5 das erfindungsgemäße Verfahren zur Detektion von mehreren gesendeten und über jeweils einen zeitveränderlichen Übertragungskanal übertragenen Datensymbol-Sequenzen aus einem Empfangssignal im Detail vorgestellt wird, werden im Folgenden die für das Verständnis des erfindungsgemäßen Verfahrens erforderlichen mathematischen Grundlagen beschrieben:

Ausgangspunkt des erfindungsgemäßen Verfahrens ist ein zeitinvariantes bzw. zeitvariantes Signalmodell der Übertragungskanäle gemäß Gleichung (1):

$$\underline{r}^{(k)} = \underline{D}^{(k)} \cdot \underline{h}^{(k)} + \underline{n}^{(k)} \tag{1}$$

Die Übertragungskanäle werden zur Schätzung der Impulsantworten der Übertragungskanäle in einer ersten Phase mit einer gesendeten Datensymbol-Trainingssequenz $\underline{d}$ der Länge $L_t$ angeregt. Zur Schätzung der Impulsantwort des jeweiligen Übertragungskanals in den ersten $L_t$ Zeitpunkten kann ein adaptiver Kanalschätzungsalgorithmus ohne Berücksichtigung der Kanalstatistik (beispielsweise ein Least-Squares-Algorithmus), mit Berücksichtigung der unbekannten Kanalstatistik (beispielsweise ein MMSE-Kanalschätzverfahren), mit Beücksichtigen der bekannten Kanalstatistik (beispielsweise ein Maximum-Likelihood-Schätzverfahren bzw. deren Derivate) oder eine blinde bzw. semiblinde Erstkanalschätzung eingesetzt sein.

Eine Schätzung der gesendeten Datensymbole kann folglich nicht in den ersten $L_t$ empfangenen Datensymbolen $r(k)$, $0 \le k \le L_t$ -1, sondern frühestens zum Zeitpunkt $L_t$
erfolgen. Der Vektor $\underline{r}^{(k)}$ der empfangenen Datensymbole zur Schätzung des jeweilig gesendeten Datensymbols zu einem beliebigen Zeitpunkt $k$ beginnt folglich gemäß Gleichung (2) erst ab dem Zeitpunkt $L_t$.

$$\underline{r}^{(k)} = [r(L_t), r(L_t + 1), \ldots, r(k)]^T \tag{2}$$

Analog beginnt auch der Rauschvektor $\underline{n}^{(k)}$ gemäß Gleichung (3) erst ab dem Zeitpunkt $L_t$.

$$\underline{n}^{(k)} = [n(L_t), n(L_t + 1), \ldots, n(k)]^T \tag{3}$$

Der Vektor $\underline{n}^{(k)}$ enthält gemäß Gleichung (4) die Impulsantworten der einzelnen Übertragungskanäle:

$$\underline{h}^{(k)} = [\underline{h}_1^{(k)^T}, .., \underline{h}_u^{(k)^T}, .., \underline{h}_U^{(k)^T}]^T \tag{4}$$

Hierbei ergibt sich die Impulsantwort $\underline{h}_u^{(k)T}$ des u-ten Übertragungskanals gemäß Gleichung (5).

$$\underline{h}_u^{(k)^T} = \left(h_u(0), h_u(1), ..., h_u(L_{hu}-1)\right)^T \tag{5}$$

Die Toeplitz-Matrix $\underline{D}_u^{(k)}$ der vom u-ten Sender gesendeten Datensymbole ergibt sich folglich gemäß Gleichung (6):

$$\underline{D}_u^{(k)} = \begin{pmatrix} d_u(L_t) & d_u(L_t-1) & \cdots & d_u(L_t-(L_h-1)) \\ d_u(L_t+1) & d_u(L_t) & \cdots & d_u(L_t-(L_h-2)) \\ d_u(L_t+2) & d_u(L_t+1) & \cdots & d_u(L_t-(L_h-3)) \\ \vdots & \vdots & \cdots & \vdots \\ d_u(k) & d_u(k-1) & \cdots & d_u(k-(L_h-1)) \end{pmatrix} \tag{6}$$

Die Toeplitz-Matrix $\underline{D}^{(k)}$ in Gleichung (1) setzt sich folglich gemäß Gleichung (7) aus den einzelnen für jeden Sender gemäß Gleichung (6) definierten Toeplitz-Matrizen zusammen.

$$\underline{D}^{(k)} = \left(\underline{D}_1^{(k)} \quad ... \quad \underline{D}_u^{(k)} \quad ... \quad \underline{D}_U^{(k)}\right) \tag{7}$$

Zur Schätzung der zum Zeitpunkt $k$ jeweils gesendeten Datensymbole aus einer empfangenen Datensymbol-Sequenz $\underline{r}$ nach insgesamt $\tilde{N}$ Zeitpunkten gemäß Gleichung (8), wobei $\tilde{N}$ ein um die Impulslänge $L_h$ der jeweiligen Kanalimpulsantwort verlängerter beliebiger Zeitpunkt $N$ ist, wird bei Anwendung des Maximum-Likelihood-Ansatzes die bedingte Wahrscheinlichkeit $P(\underline{D}^{(k)}/\underline{r})$ maximiert.

$$\underline{r} = [r(0), r(1), ..., r(\tilde{N}-1)]^T \quad \text{mit} \quad \tilde{N} = N + L_h - 1 \tag{8}$$

Die bedingte Wahrscheinlichkeit $P(\underline{D}^{(k)}/\underline{r})$ aus der empfangenen Datensymbol-Sequenz $\underline{r}$ kann gemäß Gleichung (9) durch die bedingte Wahrscheinlichkeit $P(\underline{D}^{(k)}/\underline{r}^{(k)})$ aus der empfangenen Datensymbol-Sequenz $\underline{r}^{(k)}$ bis zum Zeitpunkt $k$ angenähert werden.

$$P\left(\underline{D}^{(k)} \mid \underline{r}\right) \approx P\left(\underline{D}^{(k)} \mid \underline{r}^{(k)}\right) \tag{9}$$

Eine Identität zwischen den beiden bedingten Wahrscheinlichkeiten in Gleichung (9) liegt i.a. nicht vor, da aufgrund der Faltung der beispielsweise vom u-ten Sender gesendeten Datensymbol-Sequenz $\underline{d}_u^{(k)} = [d_u(k), d_u(k-1), d_u(k-2), ..., d_u(k-(L_h-1))]^T$ mit der Impulsantwort $\underline{h}_u$ des beispielsweise u-ten Übertragungskanals auch Signalanteile der jeweilig gesendeten Datensymbol-Sequenz $\underline{d}_U{}^{(k)}$ in empfangenen Datensymbol-Sequenzen $\{r(i)\}_{i=k+1}^{k+L_k-1}$ nach dem Zeitpunkt $k$ enthalten sein können.

Nach Anwendung der Bayes-Regel und Logarithmierung der bedingten Wahrscheinlichkeiten in Gleichung (9) ergibt sich Gleichung (10):

$$\ln P\left(\underline{D}^{(k)} \mid \underline{r}\right) \approx \ln\left(\frac{P(\underline{r}^{(k)} \mid \underline{D}^{(k)}) \cdot P(\underline{D}^{(k)})}{P(\underline{r}^{(k)})}\right) = \ln\left(\frac{f_{\underline{R}^{(k)} \mid \underline{D}^{(k)}}(\underline{r}^{(k)} \mid \underline{D}^{(k)}) \cdot P(\underline{D}^{(k)})}{f_{\underline{R}^{(k)}}(\underline{r}^{(k)})}\right)$$

$$(10)$$

Da alle Datensymbol-Sequenzen $\underline{D}^{(k)}$ als gleich wahrscheinlich angenommen werden, gilt Gleichung (11).

$$P\left(\underline{D}^{(k)}\right) = const.\qquad(11)$$

Die Wahrscheinlichkeitsdichtefunktion $f_{\underline{R}(k)}(\underline{r}^{(k)})$ einer bis zum Zeitpunkt $k$ empfangenen Datensymbol-Sequenz $\underline{r}^{(k)}$ weist für alle möglichen bis zu beliebigen Zeitpunkten $k$ empfangenen Datensymbol-Sequenzen $\underline{R}^{(k)}$ einen identischen Verlauf auf und beeinflusst deshalb die bedingte Wahrscheinlichkeit $P(\underline{D}^{(k)}|\underline{r})$ nicht.

Für ein Gauß-verteiltes Rauschen ergibt sich die Wahrscheinlichkeitsdichtefunktion $f_{\underline{R}(k)|\underline{D}(k)}(\underline{r}^{(k)}|\underline{D}^{(k)})$ gemäß Gleichung (12), wobei $\tilde{L}(\underline{D}^{(k)},\underline{h}^{(k)},\underline{r}^{(k)})$ die Log-Likelihood-Funktion, $C_n$ die Kovarianzmatrix des Rauschsignals $n$, $I_n$ die Einheitsmatrix und $\overline{N}$ die Dimension der empfangenen Datensymbol-Sequenz $\underline{r}^{(k)}$ gemäß Gleichung (13) ist:

$$f_{\underline{R}^{(k)}|\underline{D}^{(k)}}(\underline{r}^{(k)} \mid \underline{D}^{(k)}) = \frac{1}{\pi^{\overline{N}} \cdot \det(C_n)} \cdot e^{-\tilde{L}\left(\underline{D}^{(k)},\underline{h}^{(k)},\underline{r}^{(k)}\right)} \quad \text{mit} \quad C_n = \sigma_n{}^2 \cdot I_n$$

$$(12)$$

$$\overline{N} = k - L_t + 1 \qquad\qquad (13)$$

Unter Berücksichtigung der mathematischen Beziehungen in den Gleichungen (11) bis (13) kann die mathematische Beziehung für die logarithmierte bedingte Wahrscheinlichkeit ln $P(\underline{D}^{(k)}|\underline{r})$ ausgehend von Gleichung (10) nach Gleichung (14) überführt werden.

$$\ln(P(\underline{D}^{(k)} \mid \underline{r}) \approx \ln f_{\underline{R}^{(k)}|\underline{D}^{(k)}}(\underline{r}^{(k)} \mid \underline{D}^{(k)})$$

$$= -\tilde{L}\left(\underline{D}^{(k)}, \underline{h}^{(k)}, \underline{r}^{(k)}\right) - (k - L_t + 1)\ln \pi - \ln \sigma_n^2 \qquad (14)$$

Die Log-Likelihood-Funktion $\tilde{L}(\underline{D}^{(k)},\underline{h}^{(k)},\underline{r}^{(k)})$ ergibt sich in Anlehnung an Kammeyer, K.D.: "Nachrichtenübertragung", Teubner-Verlag, 1996, Seite 554-555, gemäß Gleichung (15):

$$\widetilde{L}\left(\underline{D}^{(k)},\underline{h}^{(k)},\underline{r}^{(k)}\right)=\frac{1}{\sigma_n^2}\left(\underline{r}^{(k)}-\underline{D}^{(k)}\cdot\underline{h}^{(k)}\right)^{H}\cdot\left(\underline{r}^{(k)}-\underline{D}^{(k)}\cdot\underline{h}^{(k)}\right) \qquad (15)$$

Da die beiden letzten Terme in Gleichung (14) lediglich Parameter enthalten, sind sie für die Maximierung der bedingten Wahrscheinlichkeit $P(\underline{D}^{(k)}|\underline{r})$ nicht wesentlich und können vernachlässigt werden. Die bedingte Wahrscheinlichkeit $P(\underline{D}^{(k)}|\underline{r})$ wird folglich maximiert, wenn die Log-Likelihood-Funktion $\widetilde{L}(\underline{D}^{(k)},h^{(k)},r^{(k)})$ minimiert wird.

Die mathematische Beziehung für die bedingte Wahrscheinlichkeit $P(\underline{D}^{(k)}|\underline{r})$ in Gleichung (15) kann ausgehend von Träger, J.: "Kombinierte Kanalschätzung und Dekodierung für Mobilfunkkanäle", ISBN 3-8265-4336-X, Shaker-Verlag, Aachen, 1993, entsprechend Gleichung (16) umgeformt werden.

$$\begin{aligned}
&\tilde{L}\left(\underline{D}^{(k)},\underline{h}^{(k)},\underline{r}^{(k)}\right) \\
&=\left[\underline{h}^{(k)}-\left(\underline{D}^{(k)H}\underline{D}^{(k)}\right)^{-1}\underline{D}^{(k)H}\underline{r}^{(k)}\right]^{H} \\
&\left(\underline{D}^{(k)H}\underline{C}_n^{-1}\underline{D}^{(k)}\right)\left[\underline{h}^{(k)}-\left(\underline{D}^{(k)H}\underline{D}^{(k)}\right)^{-1}\underline{D}^{(k)H}\underline{r}^{(k)}\right] \\
&-\underline{r}^{(k)H}\underline{C}_n^{-1}\underline{D}^{(k)}\left(\underline{D}^{(k)H}\underline{C}_n^{-1}\underline{D}^{(k)}\right)^{-1}\underline{D}^{(k)H}\underline{C}_n^{-1}\underline{r}^{(k)}+\underline{r}^{(k)H}\underline{C}_n^{-1}\underline{r}^{(k)}
\end{aligned} \qquad (16)$$

Hierbei kommt eine Schätzung der Kanalimpulsantwort $\underline{h}^{(k)}$ nach dem RLS-Algorithmus - Reduced-Least-Squares-Algorithmus - gemäß Gleichung (16) zum Einsatz.

$$\hat{\underline{h}}^{(k)}=\left(\underline{D}^{(k)H}\underline{D}^{(k)}\right)^{-1}\cdot\underline{D}^{(k)H}\cdot\underline{r}^{(k)} \qquad (17)$$

Wie unschwer zu erkennen ist, wird die quadratische Form des ersten Terms

$$\left[\underline{h}^{(k)}-\left(\underline{D}^{(k)H}\underline{D}^{(k)}\right)^{-1}\underline{D}^{(k)H}\underline{r}^{(k)}\right]^{H}\left(\underline{D}^{(k)H}\underline{C}_n^{-1}\underline{D}^{(k)}\right)\left[\underline{h}^{(k)}-\left(\underline{D}^{(k)H}\underline{D}^{(k)}\right)^{-1}\underline{D}^{(k)H}\underline{r}^{(k)}\right]$$

der Log-Likelihood-Funktion $\widetilde{L}(\underline{D}^{(k)},\underline{h}^{(k)},\underline{r}^{(k)})$ durch den dabei verwendeten RLS-Algorithmus minimiert.

Da des Weiteren der dritte Term $\underline{r}^{(k)H}\underline{C}_n^{-1}\underline{r}^{(k)}$ der Log-Likelihood-Funktion $\widetilde{L}(\underline{D}^{(k)},\underline{h}^{(k)},\underline{r}^{(k)})$ weder eine Abhängigkeit von der Kanalimpulsantwort $\underline{h}^{(k)}$ noch von der Toeplitz-Matrix $\underline{D}^{(k)}$ aufweist, kann einzig die quadratische Form des zweithen Terms $-\underline{r}^{(k)H}\underline{C}_n^{-1}\underline{D}^{(k)}\left(\underline{D}^{(k)H}\underline{C}_n^{-1}\underline{D}^{(k)}\right)^{-1}\underline{D}^{(k)H}\underline{C}_n^{-1}\underline{r}^{(k)}$ der Log-Likelihood-Funktion $\widetilde{L}(\underline{D}^{(k)},\underline{h}^{(k)},\underline{r}^{(k)})$ zur Schätzung des im Zeitpunkt $k$ gesendeten Datensymbols herangezogen werden. Hierzu wird die Pfadmetrik $M^{(k)}$ gemäß Gleichung (18) maximiert.

$$M^{(k)}=\underline{r}^{(k)H}\cdot\underline{D}^{(k)}\cdot\left(\underline{D}^{(k)H}\underline{D}^{(k)}\right)^{-1}\cdot\underline{D}^{(k)H}\cdot\underline{r}^{(k)} \qquad (18)$$

In Anlehnung an den Viterbi-Algorithmus muss die Pfadmetrik $M^{(k)}$ gemäß Gleichung (18) zur Schätzung der in jedem Zeitpunkt $k$ jeweils gesendeten Datensymbole für jeden Zustand in jedem Zeitpunkt $k$ berechnet werden. Da die Berechnung jeder einzelnen Pfadmetrik $M^{(k)}$ zu komplex ist, wird im folgenden für das erfindungsgemäße Verfahren zur Detektion von mehreren gesendeten und über jeweils einen zeitveränderlichen Übertragungskanal übertragenen Datensymbol-Sequenzen aus einem Empfangssignal eine iterative Pfadmetrik $\tilde{M}^{(k)}$ zur Maximum-Likelihood-Schätzung der im Zeitpunkt $k$ jeweils gesendeten Datensymbole und ein iterativer Maximum-Likelihood-Schätzwert $\hat{\underline{h}}_1^{(k)},..,\hat{\underline{h}}_u^{(k)},..,$ $\hat{\underline{h}}_U^{(k)}$ für die einzelnen Kanalimpulsantworten im Zeitpunkt $k$ hergeleitet.

Die Iteration erfolgt in beiden Fällen über jeden einzelnen Zeitpunkt $k$ von Datensymbol zu Datensymbol. Generell ist in jedem Zeitpunkt $k$ die Toeplitz-Matrix $\underline{D}^{(k)}$ zuerst iterativ zu schätzen und auf der Basis der iterativ geschätzten Toeplitz-Matrix $\underline{D}^{(k)}$ die Kanalimpulsantworten $\hat{\underline{h}}_1^{(k)},..,\hat{\underline{h}}_u^{(k)},..,\hat{\underline{h}}_U^{(k)}$ iterativ zu schätzen, die wiederum zur iterativen Schätzung der Toeplitz-Matrix $\underline{D}^{(k+1)}$ im nächsten Zeitpunkt $k + 1$ herangezogen wird. Alternativ kann die Iteration der Schätzwerte $\hat{\underline{h}}_1^{(k)},..,\hat{\underline{h}}_u^{(k)},..,\hat{\underline{h}}_U^{(k)}$ der Kanalimpulsantworten auch über mehrere Datensymbole erfolgen.

Zur Entwicklung einer jeweils unabhängigen Iteration für die Schätzwerte $\hat{\underline{h}}_1^{(k)},..,\hat{\underline{h}}_u^{(k)},..,\hat{\underline{h}}_U^{(k)}$ der Kanalimpulsantworten $\underline{h}_1^{(k)},..,\underline{h}_u^{(k)},..,\underline{h}_U^{(k)}$ und für die Pfadmetrik $\tilde{M}^{(k)}$ bei Berücksichtigung der zuletzt iterativ ermittelten Schätzwerte der jeweils anderen Schätzgröße werden in einem Zwischenschritt für die Berechnung der Schätzwerte $\hat{\underline{h}}_1^{(k)},..,$ $\hat{\underline{h}}_u^{(k)},..,\hat{\underline{h}}_U^{(k)}$ der Kanalimpulsantworten $\hat{\underline{h}}_1^{(k)},..,\hat{\underline{h}}_u^{(k)},..,\hat{\underline{h}}_U^{(k)}$ gemäß Gleichung (17) die beiden Hilfsgrößen $\underline{v}^{(k)}$ gemäß Gleichung (19) und $D^{(k)}$ gemäß Gleichung (20) eingeführt.

$$\underline{v}^{(k)} = \underline{D}^{(k)^H} \cdot \underline{r}^{(k)} \qquad (19)$$

$$\mathbb{D}^{(k)} = \underline{D}^{(k)^H} \cdot \underline{D}^{(k)} \qquad (20)$$

Die Schätzwerte $\hat{\underline{h}}_1^{(k)},..,\hat{\underline{h}}_u^{(k)},..,\hat{\underline{h}}_U^{(k)}$ der Kanalimpulsantworten $\underline{h}_1^{(k)},..,\underline{h}_u^{(k)},..,\underline{h}_U^{(k)}$ können somit unter Berücksichtigung der Hilfsgrößen $\underline{v}^{(k)}$ und $D^{(k)}$ entsprechend Gleichung (21) ermittelt werden.

$$\hat{\underline{h}}^{(k)} = \mathbb{D}^{(k)^{-1}} \underline{v}^{(k)} \qquad (21)$$

Die beiden Hilfsgrößen - Vektor $\underline{v}^{(k)}$ und Matrix $D^{(k)}$ - lassen sich jeweils iterativ gemäß Gleichung (22) und (23) berechnen:

$$\underline{v}^{(k)} = \underline{v}^{(k-1)} + \underline{d}^{(k)^*} \cdot r(k) \qquad (22)$$

$$\mathbb{D}^{(k)} = \mathbb{D}^{(k-1)} + \underline{d}^{(k)^*} \cdot \underline{d}^{(k)^T} \qquad (23)$$

Die Datensymbol-Sequenz $\underline{d}^{(k)}$ ergibt sich gemäß Gleichung (24) aus den von den einzelnen Sendern $1_1$, .., $1_u$, .., $1_U$ jeweils abgestrahlten Datensymbol-Sequenzen $\underline{d}_1^{(k)},..,\underline{d}_u^{(k)},..,\underline{d}_U^{(k)}$.

$$\underline{d}^{(k)} = \left( d_1(k)\, d_1(k-1) \ \dots \ d_1(k-(L_{h1}-1)) \ \dots \ d_u(k) \ d_u(k-1) \ .. \ d_u(k-(L_{hu}-1)) \ \dots \right.$$
$$\left. \dots.\ d_U(k) \ d_U(k-1) \ .. \ d_U(k-(L_{hU}-1)) \right) \qquad (24)$$

Da die Datensymbol-Sequenz $\underline{d}^{(k)}$ abhängig vom Zeitpunkt $k$ und von der Impulslänge $L_{h1},..,L_{hu},..,L_{hU}$ der

jeweiligen Kanalimpulsantwort $\underline{h}_1{}^{(k)},..,\underline{h}_u{}^{(k)},..,\underline{h}_U{}^{(k)}$ u.U. Datensymbole mit negativem Index aufweisen, sind diese geeignet zu initialisieren (z.B. $d_1(k),..,d_u(k),..,d_U(k)=0 \; \forall k < 0$).

Unter Anwendung des Matrix-Inversionslemma in Anlehnung an Kammeyer, K.D.: "Nachrichtenübertragung", Teubner-Verlag, 1996, Seite 729 - 730, ergibt sich die inverse Matrix $D^{(k)-1}$ der Matrix $D^{(k)}$ entsprechend Gleichung (25) unter Verwendung der Kalman-Verstärkung $g^{(k)}$ gemäß Gleichung (26) :

$$\mathbb{D}^{(k)^{-1}} = \mathbb{D}^{(k-1)^{-1}} - g^{(k)} \cdot \underline{d}^{(k)^{T}} \cdot \mathbb{D}^{(k-1)^{-1}} \tag{25}$$

$$g^{(k)} = \mathbb{D}^{(k-1)^{-1}} \cdot \underline{d}^{(k)^{\bullet}} \cdot (1 + \underline{d}^{(k)^{T}} \cdot \mathbb{D}^{(k-1)^{-1}} \cdot \underline{d}^{(k)^{\bullet}})^{-1} \tag{26}$$

Gleichung (25) kann nach Gleichung (27) und Gleichung (26) kann unter Berücksichtigung von Gleichung (27) nach Gleichung (28) mathematisch umgeformt werden.

$$\mathbb{D}^{(k-1)^{-1}} \cdot \underline{d}^{(k)^{\bullet}} = g^{(k)} \cdot (1 + \underline{d}^{(k)^{\bullet}} \cdot \mathbb{D}^{(k-1)^{-1}} \cdot \underline{d}^{(k)^{\bullet}}) \tag{27}$$

$$\mathbb{D}^{(k)^{-1}} \cdot \underline{d}^{(k)^{\bullet}} = g^{(k)} \cdot (1 + \underline{d}^{(k)^{T}} \cdot \mathbb{D}^{(k-1)^{-1}} \cdot \underline{d}^{(k)^{\bullet}}) - g^{(k)} \cdot \underline{d}^{(k)^{T}} \cdot \mathbb{D}^{(k-1)^{-1}} \cdot \underline{d}^{(k)^{\bullet}} \tag{28}$$

Aus Gleichung (28) ergibt sich schließlich die mathematische Beziehung der Kalman-Verstärkung $g^{(k)}$ gemäß Gleichung (29):

$$g^{(k)} = \mathbb{D}^{(k)^{-1}} \cdot \underline{d}^{(k)^{\bullet}} \tag{29}$$

Die iterative Berechnung der Schätzwerte $\hat{\underline{h}}_1{}^{(k)},..,\hat{\underline{h}}_u{}^{(k)},..,\hat{\underline{h}}_U{}^{(k)}$ der Kanalimpulsantworten $\underline{h}_1{}^{(k)},..,\underline{h}_u{}^{(k)},..,\underline{h}_U{}^{(k)}$ ergibt sich ausgehend von Gleichung (21) unter Berücksichtigung von Gleichung (22), (25) und (29) entsprechend Gleichung (30):

$$\hat{\underline{h}}^{(k)} = \hat{\underline{h}}^{(k-1)} + g^{(k)} \cdot (r(k) - \hat{\underline{d}}^{(k)^{T}} \cdot \hat{\underline{h}}^{(k-1)}) \tag{30}$$

Unter Einführung des a-priori-Schätzfehlers $e^{(k|k-1)}$ zwischen dem empfangenen Datensymbol $r(k)$ und den Schätzungen $\underline{d}_1{}^{(k)T} \cdot \hat{\underline{h}}_1{}^{(k-1)},..,\underline{d}_u{}^{(k)T} \cdot \hat{\underline{h}}_u{}^{(k-1)},..,\underline{d}_U{}^{(k)T} \cdot \hat{\underline{h}}_U{}^{(k-1)}$ der empfangenen Datensymbol-Sequenzen $\underline{d}_1{}^{(k)T} \cdot \underline{h}_1{}^{(k-1)},..,\underline{d}_u{}^{(k)T} \cdot \underline{h}_u{}^{(k-1)},..,\underline{d}_U{}^{(k)T} \cdot \underline{h}_U{}^{(k-1)}$, die sich aus den Gewichtungen der Schätzungen $\hat{\underline{d}}_1{}^{(k)},..,\hat{\underline{d}}_u{}^{(k)},..,\hat{\underline{d}}_U{}^{(k)}$ der bis zum Zeitpunkt $k$ gesendeten Datensymbol-Sequenzen $\underline{d}_1{}^{(k)},..,\underline{d}_u{}^{(k)},..,\underline{d}_U{}^{(k)}$ mit den zum vorherigen Zeitpunkt $k$-1 eschätzten Kanalimpulsantworten $\hat{\underline{h}}_1{}^{(k)},..,\hat{\underline{h}}_u{}^{(k)},..,\hat{\underline{h}}_U{}^{(k)}$ ergibt, kann die iterative Berechnungsformel für den Schätzwert $\hat{\underline{h}}^{(k)}$ der Kanalimpulsantwort $\underline{h}^{(k)}$ gemäß Gleichung (30) ausgehend von Gleichung (31) nach Gleichung (32) umgeformt werden.

$$e^{(k|k-1)} = r(k) - \hat{\underline{d}}^{(k)T} \cdot \hat{\underline{h}}^{(k-1)} \qquad (31)$$

$$\hat{\underline{h}}^{(k)} = \hat{\underline{h}}^{(k-1)} + \underline{g}^{(k)} \cdot e^{(k|k-1)} \qquad (32)$$

Die iterative Berechnung der Pfadmetrik $\hat{M}^{(k)}$ zur Maximum-Likelihood-Schätzung der im Zeitpunkt $k$ gesendeten Datensymbole $d_1(k),..,d_u(k),..,d_U(k)$ ergibt sich ausgehend von Gleichung (18) unter Berücksichtigung der mathematischen Beziehung für die Hilfsgröße $\underline{v}^{(k)}$ in Gleichung (17) und der mathematischen Beziehung für den Schätzwert $\hat{\underline{h}}^{(k)}$ der Kanalimpulsantwort in Gleichung (19) entsprechend Gleichung (33) :

$$\tilde{M}^{(k)} = \underline{v}^{(k)H} \hat{\underline{h}}^{(k)} \qquad (33)$$

Gleichung (33) lässt sich unter Berücksichtigung der iterativen Berechnungsformel für die Hilfsgröße $\underline{v}^{(k)}$ in Gleichung (22) und für den Schätzwert $\hat{\underline{h}}^{(k)}$ der Kanalimpulsantwort in Gleichung (32) nach Gleichung (33') mathematisch umformen:

$$\tilde{M}^{(k)} = \left(\underline{v}^{(k-1)H} + r(k)^{\bullet} \hat{\underline{d}}^{(k)T}\right)\left(\hat{\underline{h}}^{(k-1)} + \underline{g}^{(k)} e^{(k|k-1)}\right) \qquad (33')$$

Gleichung (33') kann unter Berücksichtigung der mathematischen Beziehung für den Kalman-Verstärkungsfaktor $\underline{g}^{(k)}$ in Gleichung (26) und der iterativen Berechnungsformel für die Hilfsgröße $\underline{v}^{(k)}$ in Gleichung (22) nach Gleichung (33") umgeformt werden.

$$\tilde{M}^{(k)} = \underline{v}^{(k-1)H} \hat{\underline{h}}^{(k-1)} + r(k)^{\bullet} \hat{\underline{d}}^{(k)T} \hat{\underline{h}}^{(k-1)} + \underline{v}^{(k)H} \mathbb{D}^{(k)-1} \hat{\underline{d}}^{(k)\bullet} e^{(k|k-1)} \qquad (33'')$$

Der erste Term in Gleichung (33") entspricht der Pfadmetrik $\tilde{M}^{(k-1)}$ zum vorherigen Zeitpunkt $k$ - 1. Der Term $\underline{v}^{(k)H}D^{(k)-1}$ in Gleichung (33") kann gemäß Gleichung (32) durch den Schätzwert $\hat{\underline{h}}^{(k)}$ der Kanalimpulsantwort ersetzt werden. Schließlich wird die rechte Seite der Gleichung (33") um das Betragsquadrat der empfangenen Datensymbol-Sequenz $|r(k)|^2$ und um den betragsgleichen negativen Term $- r(k)^* \cdot r(k)$ erweitert. Somit entsteht die in Gleichung (33''') dargestellte iterative Berechnungsformel für die Pfadmetrik $\tilde{M}^{(k)}$.

$$\tilde{M}^{(k)} = \tilde{M}^{(k-1)} - r(k)^{\bullet} \cdot \left(r(k) - \hat{\underline{d}}^{(k)T} \cdot \hat{\underline{h}}^{(k-1)}\right) + \hat{\underline{h}}^{(k)} \cdot \hat{\underline{d}}^{(k)\bullet} \cdot e^{(k|k-1)} + \left|r(k)\right|^2 \qquad (33''')$$

Unter Berücksichtigung des a-priori-Schätzfehlers $e^{(k|k-1)}$ gemäß Gleichung (31) kann Gleichung (33''') nach Gleichung (33'''') überführt werden.

$$\tilde{M}^{(k)} = \tilde{M}^{(k-1)} - (r(k)^{\bullet} - \hat{\underline{h}}^{(k)} \cdot \hat{\underline{d}}^{(k)\bullet}) \cdot e^{(k|k-1)} + \left| r(k) \right|^2 \qquad (33\check{\ }\check{\ }\check{\ }\check{\ })$$

Führt man den a-posteriori-Schätzfehlers $e^{(k|k)}$ zwischen dem empfangenen Datensymbol $r(k)$ und den Schätzungen $\hat{\underline{d}}_1^{(k)T} \cdot \hat{\underline{h}}_1^{(k-1)},..,\hat{\underline{d}}_u^{(k)T} \cdot \hat{\underline{h}}_u^{(k-1)},..,\hat{\underline{d}}_U^{(k)T} \cdot \hat{\underline{h}}_U^{(k-1)}$ der empfangenen Datensymbol-Sequenzen $\hat{\underline{d}}_1^{(k)T} \cdot \hat{\underline{h}}_1^{(k-1)},..,\hat{\underline{d}}_u^{(k)T} \cdot \hat{\underline{h}}_u^{(k-1)},..,\hat{\underline{d}}_U^{(k)T} \cdot \hat{\underline{h}}_U^{(k-1)}$ ein die sich aus den Gewichtungen der bis zum Zeitpunkt $k$ gesendeten Datensymbol-Sequenzen $\hat{\underline{d}}_1^{(k)T} \cdot \hat{\underline{d}}_u^{(k-1)},..,\hat{\underline{d}}_U^{(k)T}$ mit den zum Zeitpunkt $k$ geschätzten Kanalimpulsantworten $\hat{\underline{h}}_1^{(k)},..,\hat{\underline{h}}_u^{(k)},..,\hat{\underline{h}}_U^{(k)}$ gemäß Gleichung (34) ergeben, so lässt sich die iterative Berechnungsformel für die Pfadmetrik $\tilde{M}^{(k)}$ zur Maximum-Likelihood-Schätzung der im Zeitpunkt $k$ gesendeten Datensymbols $d_1^{(k)},..,d_u^{(k)},..,d_U^{(k)}$ nach Gleichung (33'''') mathematisch darstellen.

$$e^{(k|k)} = r(k) - \hat{\underline{d}}^{(k)T} \cdot \hat{\underline{h}}^{(k)} \qquad (34)$$

$$\tilde{M}^{(k)} = \tilde{M}^{(k-1)} - e^{(k|k)\bullet} \cdot e^{(k|k-1)} + \left| r(k) \right|^2 \qquad (33\check{\ }\check{\ }\check{\ }\check{\ }\check{\ })$$

Da der Term $|r(k)|^2$ in der iterativen Berechnungsformel für die Pfadmetrik $\tilde{M}^{(k)}$ in Gleichung (33''''') keine Schätzgröße ist und damit zur Entscheidungsfindung im Trellis-Diagramm nicht signifikant ist, kann er vernachlässigt werden, so dass aus Gleichung (33''''') in Gleichung (35) überführt werden kann.

$$\tilde{M}^{(k)} = \tilde{M}^{(k-1)} - e^{(k|k)\bullet} \cdot e^{(k|k-1)} \qquad (35)$$

Die inverse Matrix $D^{(k)-1}$ der Matrix $D^{(k)}$ wird als Prädiktionsfehler-Korrelationsmatrix $K^{(k)}$ bezeichnet. Unter Einführung der Prädiktionsfehler-Korrelationsmatrix $K^{(k)}$ lässt sich Gleichung (25) in Gleichung (36) und Gleichung (26) in Gleichung (37) überführen.

$$K^{(k)} = K^{(k-1)} - g^{(k)} \cdot \hat{\underline{d}}^{(k)T} \cdot K^{(k-1)} \qquad (36)$$

$$g^{(k)} = K^{(k-1)} \cdot \hat{\underline{d}}^{(k)\bullet} \cdot (1 + \hat{\underline{d}}^{(k)T} \cdot K^{(k-1)} \cdot \hat{\underline{d}}^{(k)\bullet})^{-1} \qquad (37)$$

Aufgrund der Zeitvarianz des Übertragungskanals haben früher gesendete Datensymbole eine geringere Bedeutung auf das Entzerrungsergebnis des aktuell empfangenen Datensymbols $r(k)$ als aktuell gesendete Datensymbole. Durch Einführung eines Vergessensfaktors $\mu$ mit einem Wertebereich $0 < \mu \leq 1$ wird dieser Umstand berücksichtigt. Die Iterationsformeln für die beiden Hilfsgrößen - Vektor $\underline{v}^{(k)}$ und Matrix $D^{(k)}$ - in den Gleichungen (22) und (23) lassen sich unter Berücksichtigung des Vergessensfaktors $\mu$ in die entsprechenden Gleichungen (38) und (39) überführen.

$$\underline{v}^{(k)} = \mu \cdot \underline{v}^{(k-1)} + \underline{d}^{(k)\bullet} \cdot r(k) \qquad (38)$$

$$\mathbb{D}^{(k)} = \mu \cdot \mathbb{D}^{(k-1)} + \underline{d}^{(k)^{\bullet}} \cdot \underline{d}^{(k)^{T}} \tag{39}$$

Die Gleichung (35) zur iterativen Berechnung der Pfadmetrik $\tilde{M}^{(k)}$ geht bei Berücksichtigung des Vergessensfaktors $\mu$ in die Gleichung (40) über.

$$\tilde{M}^{(k)} = \mu \cdot \tilde{M}^{(k-1)} - e^{(k|k)^{\bullet}} \cdot e^{(k|k-1)} \tag{40}$$

Analog geht die Gleichung (36) Berechnung der Prädiktionsfehler-Korrelationsmatrix $K^{(k)}$ bei Berücksichtigung des Vergessensfaktors $\mu$ in die Gleichung (41) über.

$$K^{(k)} = \frac{1}{\mu} \cdot \left[ K^{(k-1)} - g^{(k)} \cdot \underline{\hat{d}}^{(k)^{T}} \cdot K^{(k-1)} \right] \tag{41}$$

Schließlich geht auch die Gleichung (37) zur iterativen Berechnung der Kalman-Verstärkung $g^{(k)}$ bei Berücksichtigung des Vergessensfaktors $\mu$ in die Gleichung (42) über.

$$g^{(k)} = K^{(k-1)} \cdot \underline{\hat{d}}^{(k)^{\bullet}} \cdot (\mu + \underline{\hat{d}}^{(k)^{T}} \cdot K^{(k-1)} \cdot \underline{\hat{d}}^{(k)^{\bullet}})^{-1} \tag{42}$$

Ändert sich die Kanalimpulsantwort $\underline{h}_1^{(k)},..,\underline{h}_u^{(k)},..,\underline{h}_U^{(k)}$ vom vorherigen Zeitpunkt $k$ -1 zum aktuellen Zeitpunkt $k$ nur geringfügig, so ist der a-priori-Schätzfehler $e^{(k|k-1)}$ und der a-posteriori-Schätzfehler $e^{(k|k)}$ näherungsweise identisch. Der Term $e^{*(k|k)} \cdot e^{(k|k-1)}$ ist folglich reellwertig positiv und die Pfadmetrik $\tilde{M}^{(k)}$ in Gleichung (40) ist entsprechend reellwertig negativ, da die maximale Pfadmetrik $\tilde{M}^{(k)}$ aus allen reellwertigen negativen Pfadmetriken $\tilde{M}^{(k)}$ der minimalen Pfadmetrik $\tilde{M}^{(k)}$ aus allen reellwertigen positiven Pfadmetriken $\tilde{M}^{(k)}$ entspricht, vorausgesetzt der Betrag $/\tilde{M}^{(k)}|$ der zueinander korrespondierenden positiven und negativen Pfadmetriken $\tilde{M}^{(k)}$ ist gleich groß. Somit kann eine Maximierung der Pfadmetrik $\tilde{M}^{(k)}$ gemäß Gleichung (40) in eine Minimierung der Pfadmetrik $\tilde{M}^{(k)}$ gemäß Gleichung (43) unter Verwendung einer Betragsbildungsfunktion oder Gleichung (44) unter Verwendung einer Realteilbildungsfunktion überführt werden.

$$\tilde{M}^{(k)} = \left| \mu \cdot \tilde{M}^{(k-1)} - e^{(k|k)^{\bullet}} \cdot e^{(k|k-1)} \right| \tag{43}$$

$$\tilde{M}^{(k)} = Re \left\{ \mu \cdot \tilde{M}^{(k-1)} - e^{(k|k)^{\bullet}} \cdot e^{(k|k-1)} \right\} \tag{44}$$

Eine zu Gleichung (43) bzw. (44) äquivalente Berechnungsformel für eine zu minimierende Pfadmetrik $\tilde{M}^{(k)}$ ergibt sich durch Betragsbildung des Terms $e^{*(k|k)} \cdot e^{(k|k-1)}$ und anschließender Addition zu der im vorhergehenden Zeitpunkt $k$-1 berechneten Pfadmetrik $\tilde{M}^{(k-1)}$ gemäß Gleichung (45) oder durch Realteilbildung des Terms $e^{*(k|k)} \cdot e^{(k|k-1)}$ und anschließender Addition zu der im vorhergehenden Zeitpunkt $k$-1 berechneten Pfadmetrik $\tilde{M}^{(k-1)}$ gemäß Gleichung (46).

$$\tilde{M}^{(k)} = \mu \cdot \tilde{M}^{(k-1)} + \left| e^{(k|k)^{\bullet}} \cdot e^{(k|k-1)} \right| \tag{45}$$

$$\tilde{M}^{(k)} = \mu \cdot \tilde{M}^{(k-1)} + \mathrm{Re}\left\{ e^{(k|k)^{\bullet}} \cdot e^{(k|k-1)} \right\} \qquad (46)$$

Für die Berechnung der Pfadmetrik $\tilde{M}^{(k)}$ kann anstelle des Produkts aus dem a-priori-Schätzfehler $e^{(k|k-1)}$ zum vorherigen Zeitpunkt $k$ - 1 und dem a-posteriori-Schätzfehler $e^{(k|k)}$ zum aktuellen Zeitpunkt $k$ alternativ ein Produkt aus einem a-priori-Schätzfehler bzw. a-posteri-Schätzfehler $e^{(k|k-n)}$ zum Zeitpunkt $n$ gemäß Gleichung (47) und aus einem a-priori-Schätzfehler bzw. a-posteri-Schätzfehler $e^{(k|k-m)}$ zum Zeitpunkt $m$ in den Ausführungsformen der Gleichungen (48), (49), (50) und (51) verwendet werden, worden, wobei die Zeitpunkte $n$ und $m$ ganzzahlige, positive Werte - $0 \le m$, $n$, $n,m \in N_0$ - sind. Die Zeitpunkte $n$ und $m$ sind in Abhängigkeit der Zeitveränderlichkeit des Übertragungskanals zu wählen. Bei hoher Zeitveränderlichkeit sind relativ kleine Werte für die Zeitpunkte $n$ und $m$ geeignet.

$$e(k \mid k - n) = r(k) - \hat{\underline{d}}^{(k)^T} \hat{\underline{h}}^{(k-n)} \qquad (47)$$

$$\tilde{M}^{(k)} = \left| \mu \cdot \tilde{M}^{(k-1)} - e^{(k|k-n)^{\bullet}} \cdot e^{(k|k-m)} \right| \qquad (48)$$

$$\tilde{M}^{(k)} = \mathrm{Re}\left\{ \mu \cdot \tilde{M}^{(k-1)} - e^{(k|k-n)^{\bullet}} \cdot e^{(k|k-m)} \right\} \qquad (49)$$

$$\tilde{M}^{(k)} = \mu \cdot \tilde{M}^{(k-1)} + \left| e^{(k|k-n)^{\bullet}} \cdot e^{(k|k-m)} \right| \qquad (50)$$

$$\tilde{M}^{(k)} = \mu \cdot \tilde{M}^{(k-1)} + \mathrm{Re}\left\{ e^{(k|k-n)^{\bullet}} \cdot e^{(k|k-m)} \right\} \qquad (51)$$

Die Produkte aus den a-priori- und a-posteriori-Schätzfehler in den Gleichungen (43) bis (46) und (48) bis (51) zur Berechnung der Pfadmetrik $\tilde{M}^{(k)}$ stellen die Zweigmetriken zwischen den jeweiligen Zuständen zum vorherigen Zeitpunkt $k$ - 1 und zum aktuellen Zeitpunkt $k$ dar.

Aus den Berechnungsformeln des a-priori- und des a-posteriori-Schätzfehlers in den Gleichungen (31), (34) und (47) sowie der iterativen Berechnungsformel für die Schätzwerte $\hat{\underline{h}}_1^{(k)},..,\hat{\underline{h}}_u^{(k)},..,\hat{\underline{h}}_U^{(k)}$ der Kanalimpulsantworten $\underline{h}_1^{(k)},..,\underline{h}_u^{(k)},..,\underline{h}_U^{(k)}$ in Gleichung (32) ist ersichtlich, dass zur Berechnung der Pfadmetrik $\tilde{M}^{(k)}$ für die einzelne Zustände $S_i$, $i = 1,..,N_s$ im Zeitpunkt $k$ die Schätzwerte $\hat{\underline{h}}_1^{(k-1)},..,\hat{\underline{h}}_u^{(k-1)},..,\hat{\underline{h}}_U^{(k-1)}$ zum vorherigen Zeitpunkt $k$ - 1 bzw. $\hat{\underline{h}}_1^{(k-n)},..,\hat{\underline{h}}_u^{(k-n)},..,\hat{\underline{h}}_U^{(k-n)}$ zum Zeitpunkt $k$ - $n$ erforderlich sind.

Während bei einem Viterbi-Algorithmus bei einer Mächtigkeit $M$ des Symbolalphabets des verwendeten Modulationsverfahren und insgesamt $N_S$ Zuständen jeweils insgesamt $M \cdot N_S$ potentielle neue Zustände im aktuellen Zeitpunkt analysiert werden und je potentiell neuen Zustand insgesamt $U$ Schätzungen der Kanalimpulsantworten $\underline{h}_1^{(k)},..,\underline{h}_u^{(k)},..,\underline{h}_U^{(k)}$ im aktuellen Zeitpunkt erforderlich ist und somit insgesamt $U \cdot M \cdot N_S$ Kanalschätzungen durchgeführt werden, müssen beim erfindungsgemäßen Verfahren zur Analyse der insgesamt $M \cdot N_S$ potentiellen neuen Zustände im aktuellen Zeitpunkt lediglich die $U$ Kanalimpulsantworten zu den insgesamt $N_S$ Vorläuferzuständen im vorhergehenden Zeitpunkt $k$ - 1 bzw. in einem noch früheren Zeitpunkt $k$ - 2, $k$ - 3 usw. geschätzt werden.

Aufgrund der Faltung der Datensymbol-Sequenz $\underline{d}^{(k)} = [\underline{d}_1^{(k)T},...,\underline{d}_u^{(k)T},..,\underline{d}_U^{(k)T}]^T$ mit dem Vektor $\underline{h}_1^{(k)},..,\underline{h}_u^{(k)},..,\underline{h}_U^{(k)}$ der Impulsantworten der Übertragungskanäle im zeitinvarianten bzw. zeitvarianten Signalmodell des Übertragungskanals gemäß Gleichung (1) enthält die Log-Likelihood-Funktion $\tilde{L}(\underline{D}^{(k)},\underline{h}^{(k)},\underline{r}^{(k)})$ gemäß Gleichung (16) und die Pfadmetrik $M^{(k)}$ gemäß Gleichung (18) in zukünftigen Zeitpunkten $k$ in den einzelnen Termen $d_1(i) \cdot h_1(j),..,d_u(i) \cdot h_u(j),..,d_U(i) \cdot h_U(j)$

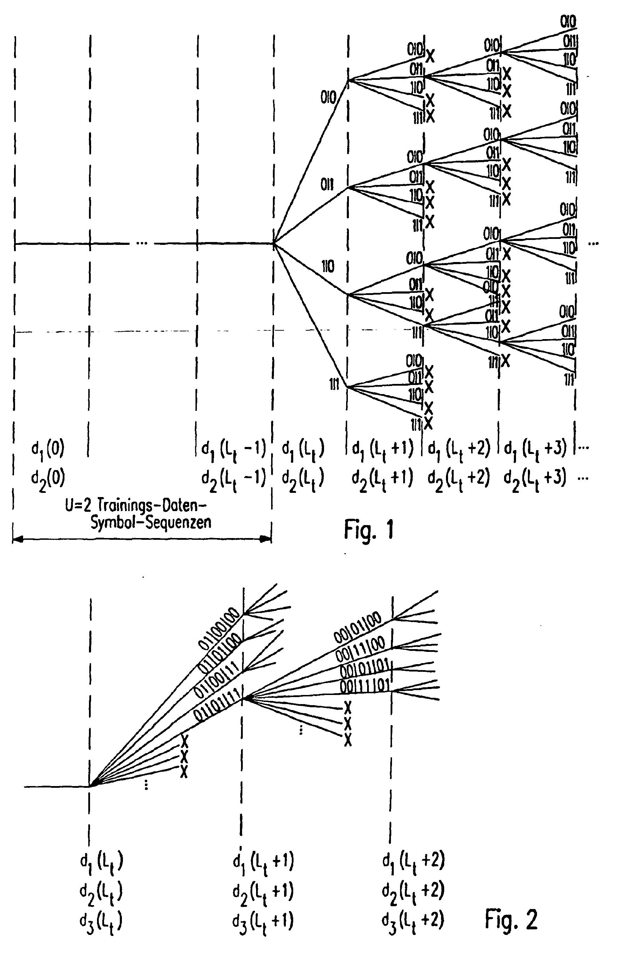

auch Datensymbole $d_1(i),..,d_u(i),..,d_U(i)$ von aktuellen bzw. vergangenen Zeitpunkten $i \leq k$, wie aus der rechte Hälfte der Fig. 2 ersichtlich ist. Damit die Energie dieser Signalanteile bei der iterativen Berechnung der Pfadmetrik $M^{(k)}$ und der Schätzwerte $\hat{\underline{h}}_1^{(k)},..,\hat{\underline{h}}_u^{(k)},..,\hat{\underline{h}}_U^{(k)}$ der Kanalimpulsantworten nicht verloren geht und zu einer ungenügenden Schätzung der bis zum Zeitpunkt $k$ gesendeten Datensymbol-Sequenzen $\underline{d}_1^{(k)},..,\underline{d}_u^{(k)},..,\underline{d}_U^{(k)}$ und der Kanalimpulsantworten $\hat{\underline{h}}_1^{(k)},..,$ $\hat{\underline{h}}_u^{(k)},..,\hat{\underline{h}}_U^{(k)}$ führt, wird im folgenden eine erweiterte Pfadmetrik $\overline{\overline{M}}^{(k)}$ entwickelt, die die in zukünftigen Zeitpunkten $i > k$ in die empfangenen Datensymbole $\underline{r}^{(i)}$ eingehenden Signalanteile dieser bis zum Zeitpunkt $k$ gesendeten Datensymbol-sequenzen $\underline{d}_1^{(k)},..,\underline{d}_u^{(k)},..,\underline{d}_U^{(k)}$ berücksichtigt.

Hierzu wird wieder das zeitinvariante Signalmodell des Übertragungskanals gemäß Gleichung (1) betrachtet. Bei einer Impulslänge $L_{h1},..,L_{hu},..,L_{hU}$ der Kanalimpulsantworten können in insgesamt $L_{h1}-1,..,L_{hu}-1,..,L_{hU}-1$ zukünftigen Zeitpunkten Signalanteile von bis zum Zeitpunkt $k$ gesendeten Datensymbol-Sequenzen $\underline{d}_1^{(k)},..,\underline{d}_u^{(k)},..,\underline{d}_U^{(k)}$ im empfangenen Datensymbol $r(k)$ enthalten sein.

Der Vektor $\underline{r}^{(k)}$ der empfangenen Datensymbole aus Gleichung (2) erweitert sich gemäß Gleichung (52) zu einem Vektor $\underline{r}^{(k+L_h-1)}$.

$$\underline{r}^{(k+L_h-1)} = \left[\underline{r}^{(k)^T}, \overline{\underline{r}}^{(k)^T}\right]^T \quad \text{mit} \quad \overline{\underline{r}}^{(k)^T} = \left[r((k+1),...,r(k+L_h-1)\right]^T \quad (52)$$

Die Toeplitz-Matrix $\underline{D}_u^{(k)}$ der vom u-ten Sender gesendeten Datensymbole aus Gleichung (6) erweitert sich entsprechend zu einer Toeplitz-Matrix $\underline{D}_u^{(k+Lh-1)}$ gemäß Gleichung (53):

$$\underline{D}_u^{(k+L_{hu}-1)} = \begin{pmatrix} \underline{D}_u^{(k)} \\ 0 & d_u(k) & ... & d_u(k-(L_{hu}-2)) \\ & 0 & ... & d_u(k-(L_{hu}-3)) \\ \vdots & \vdots & ... & \vdots \\ 0 & 0 & ... & d_u(k) \end{pmatrix} \quad (53)$$

Die in zukünftigen Zeitpunkten gesendeten Datensymbole mit $L_h = \max(L_{h1} .. L_{hu} .. L_{hU})$ sind unbekannt und stellen deshalb Zufallsvariablen mit einer diskreten Wahrscheinlichkeitsverteilung dar, die jeweils zueinander unkorreliert - $E\{d_u^*(i)\cdot d_{u'}(j)\}=\delta(i-j)\cdot\delta(u-u')$ - und jeweils mittelwertfrei - $E\{d_u(i)\} =0$ - sind und jeweils eine mittlere Signalleistung von eins besitzen. Im Signalmodell der Gleichung (1) weisen sie folglich die Signaleigenschaft eines den Übertragungskanal überlagerten Rauschsignals $\underline{n}^{(k)}$ und nicht die einer zu sendenden Datensymbolsequenz $\underline{D}^{(k)}$ auf. Folglich werden die in zukünftigen Zeitpunkten gesendeten Datensymbole durch Nullsetzen der entsprechenden Elemente in der Toeplitz-Matrix $\underline{D}_u^{(k)}$ und, wie weiter unten noch gezeigt wird, durch additive Erweiterung der Rauschleistung des Rauschsignals in der Kovarianzmatrix $C_n$ des Rauschsignals gemäß Gleichung (12) um die Signalleistung der Signalanteile $d_1(i)\cdot h_1$ $(j-i),..,d_u(i)\cdot h_u(j-i),..,d_U(i)\cdot h_U(j-i)$ der zukünftig gesendeten Datensymbole $d_1(i),..,d_u(i),..,d_U(i)$ mit $k+1\leq i\leq k+L_h-1$ bestimmt. Diese wiederum ergibt sich aus der Multiplikation der mittleren Signalleistung der gesendeten Datensymbole $d_1(i),..,d_u$ $(i),..,d_U(i)$ von eins mit dem Betragsquadrat des entsprechenden Taps $|\hat{h}_1(j-i),..,\hat{h}_u(j-i),..,\hat{h}_U(j-i)|^2$ der Schätzwerte $\hat{h}_1^{(k)},..,$ $\hat{h}_u^{(k)},..,\hat{h}_U^{(k)}$ der Kanalimpulsantworten $h_1^{(k)},..,h_u^{(k)},..,h_U^{(k)}$.

Die Toeplitzmatrix $\underline{D}^{(k+Lh-1)}$ gemäß Gleichung (54) setzt sich aus den zu den einzelnen Sendern $1_1,..,1_u,..1_U$ gehörigen Toeplitzmatrizen $\underline{D}_1^{(k+Lh1-1)},..,\underline{D}_u^{(k+Lhu-1)},..,\underline{D}_U^{(k+LhU-1)}$ entsprechend Gleichung (53) zusammen.

$$\underline{D}^{(k+L_h-1)} = \left(\underline{D}_1^{(k+L_{h1}-1)} \quad ... \quad \underline{D}_u^{(k+L_{hu}-1)} \quad ... \quad \underline{D}_U^{(k+L_{hU}-1)}\right) \quad (54)$$

Die Log-Likelihood-Funktion $\tilde{L}(\underline{D}^{(k)},\underline{h}^{(k)},\underline{r}^{(k)})$ aus Gleichung (15) erweitert sich dementsprechend zu einer erweiterten

Log-Likelihood-Funktion $\overline{\overline{L}}\left(\underline{D}^{(k+L_h-1)}, \hat{\underline{h}}^{(k)}, \underline{r}^{(k+L_h-1)}\right)$ gemäß Gleichung (55): +

$$\overline{\overline{L}}\left(\underline{D}^{(k+L_h-1)}, \hat{\underline{h}}^{(k)}, \underline{r}^{(k+L_h-1)}\right) = \left(\underline{r}^{(k+L_h-1)} - \underline{D}^{(k+L_h-1)} \cdot \hat{\underline{h}}^{(k)}\right)^H \cdot \overline{C}_n^{-1} \cdot \left(\underline{r}^{(k+L_h-1)} - \underline{D}^{(k+L_h-1)} \cdot \hat{\underline{h}}^{(k)}\right)$$

$$(55)$$

Zusätzlich wird in Gleichung (55) die Impulsantwort $\underline{h}_1^{(k)},..,\underline{h}_u^{(k)},..,\underline{h}_U^{(k)}$ des übertragungskanals in Gleichung (15) durch ihren Schätzwert $\hat{\underline{h}}_1^{(k)},..,\hat{\underline{h}}_u^{(k)},..,\hat{\underline{h}}_U^{(k)}$ ersetzt.

Bei der Ermittlung der Kovarianzmatrix $\overline{C}_n$ ist zu berücksichtigen, dass sich diese nicht nur aus der Rausch-leistung $\sigma_n^2$ des Rauschsignals gemäß Gleichung (12), sondern auch aus der Signalleistung der Signalanteile $d_1(i)\cdot h_1$ $(j\text{-}i),..,d_u(i)\cdot h_u(j\text{-}i),..,d_U(i)\cdot h_U(j\text{-}i)$ der zukünftig gesendeten Datensymbole $d_1(i),..,d_u(i),..,d_U(i)$ mit $k + 1 \leq i \leq k + L_h$ - 1 und $L_h = \max(L_{h1}, .., L_{hu}, .., L_{hU})$ zusammensetzt, die im empfangenen Datensymbol $r(j)$ mit $i \leq j \leq k + L_h$ -1 enthalten sind - Datensymbole mit "?"-Symbol in Fig. 3 - und trotz ihrer Unbekanntheit zum Zeitpunkt $k$ die Schätzung der bis zum Zeitpunkt $k$ gesendeten Datensymbol-Sequenzen $\underline{d}_1^{(k)},..,\underline{d}_u^{(k)},..,\underline{d}_U^{(k)}$ mit Hilfe der erweiterten Pfadmetrik $\overline{\overline{M}}^{(k)}$ ver-fälschen. Die Signalleistung eines derartigen Signalanteils $d_1(i)\cdot h_1(j\text{-}i),..,d_u(i)\cdot h_u(j\text{-}i),..,d_U(i)\cdot h_U(j\text{-}i)$ ergibt sich unter der Voraussetzung, dass die mittlere Signalleistung der gesendeten Datensymbole $d_1(i),..,d_u(i),..,d_U(i)$ zu 1 angenommen wird, aus dem Betragsquadrat des entsprechenden Taps $|\hat{h}_1(j\text{-}i),..,\hat{h}_u(j\text{-}i),..,\hat{h}_U(j\text{-}i)|^2$ der Schätzwerte $\hat{\underline{h}}_1^{(k)},..,\hat{\underline{h}}_u^{(k)},..,\hat{\underline{h}}_U^{(k)}$ der Kanalimpulsantworten $\underline{h}_1^{(k)},..,\underline{h}_u^{(k)},..,\underline{h}_U^{(k)}$ Somit lässt sich die Kovarianzmatrix $\overline{C}_n$ gemäß Gleichung (56) darstellen.

$$\overline{C}_n = diag(\sigma^2(i)) \quad \text{mit} \quad \sigma^2(i) = \begin{cases} \sigma_n^2 & L_i \leq i \leq k \\ \sigma_n^2 + \sum_{u=1}^{U} \sum_{l=0}^{\min(i-(k+1),L_{hu}-1)} \left|\hat{\underline{h}}_u(l)\right|^2 & k+1 < i \leq L_h - 1 \end{cases}$$

$$(56)$$

Die Minimierung der erweiterten Log-Likelihood-Funktion $\overline{L}(\underline{D}^{(k+L_h-1)}, \hat{\underline{h}}^{(k)}, \underline{r}^{(k+L_h-1)})$ gemäß Gleichung (55) führt auf die erweiterte Pfadmetrik $\overline{\overline{M}}^{(k)}$ entsprechend Gleichung (57):

$$\overline{\overline{M}}^{(k)} = \frac{\tilde{M}^{(k)}}{\sigma^2} + \sum_{i=1}^{L_h-1} \left\{ \frac{\left|r(k+1) - \sum_{u=1}^{U} \sum_{n=0}^{L_{hu}-1-i} d_u(k-n) \cdot \hat{h}_u(i+n)\right|^2}{\sigma_n^2 + \sum_{u=1}^{U} \sum_{n=0}^{\min(L_{hu},i-1)} \left|\hat{h}_u(n)\right|^2} \right\} \qquad (57)$$

Die erweiterte Metrik $\overline{\overline{M}}^{(k)}$ ergibt sich also aus der Addition der nach einer der Gleichungen (43) bis (46) bzw. (48) bis (51) iterative berechneten Metrik $\tilde{M}^{(k)}$, gewichtet mit der inversen Rauschleistung $\sigma^2$, und einem Erweite-rungsterm $\delta(k)$, der dem Klammerausdruck der Gleichung (57) entspricht und die in den zukünftig empfangenen Datensymbolen enthaltenen Signalanteile aus der bis zum aktuellen Zeitpunkt $k$ gesendeten Datensymbol-Sequenzen $\underline{d}_1^{(k)},..,\underline{d}_u^{(k)},..,\underline{d}_U^{(k)}$ berücksichtigt. wie aus Gleichung (57) ersichtlich ist, weist der Erweiterungsterm $\delta(k)$ der erweiterten

Metrik $\overline{\overline{M}}^{(k)}$ des erfindungsgemäßen Verfahrens den im Erweiterungsterm $\delta(k)$ der erweiterten Metrik $\overline{\overline{M}}^{(k)}$ der Patentanmeldung DE 10 2006 029 464.5 enthaltenen Term nicht auf. Die Berechnung der

Erweiterungsmetrik $\overline{\overline{M}}^{(k)}$ ist folglich im erfindungsgemäßen Verfahren mit einem geringeren Signalverarbeitungsaufwand verbunden.

Die Erweiterungsmetrik $\overline{\overline{M}}^{(k)}$ lässt sich verkürzt gemäß Gleichung (58) darstellen.

$$\overline{\overline{M}}^{(k)} = \frac{\tilde{M}^{(k)}}{\sigma^2} + \delta(k) \qquad (58)$$

Eine Gewichtung des Erweiterungsterm $\delta(k)$ zur iterativ berechneten Metrik $\tilde{M}^{(k)}$ kann durch Einführung eines Gewichtungsfaktor w, der additiver Metrik $\tilde{M}^{(k)}$ positiv und bei subtraktiver Metrik $\tilde{M}^{(k)}$ negativ ist, gemäß Gleichung (59) erzielt werden.

$$\overline{\overline{M}}^{(k)} = \frac{\tilde{M}^{(k)}}{\sigma^2} + w \cdot \delta(k) \qquad (59)$$

In Fig. 4 ist das Übertragungssystem für die Anwendung des erfindungsgemäßen Verfahrens zur Detektion von über einen zeitveränderlichen Übertragungskanal übertragenen Datensymbol-Sequenzen mit reduziertem Signalverarbeitungsaufwand dargestellt. In mehreren Sendern $1_1,..,1_u,..,1_U$, die jeweils eine Sender-Gewichtsfunktion $g_{T1}(t),..,g_{Tu}(t),..,g_{TU}(t)$ aufweisen, wird jeweils eine Datensymbol-Sequenz abgestrahlt.

Die mit der jeweiligen Sender-Gewichtsfunktion jeweils gewichtete Datensymbol-Sequenz wird über einen jeweiligen Übertragungskanal $2_1,..,2_u,..,2_U$ mit der jeweiligen zeitvarianten Gewichtsfunktion $g_{CH1}(\tau,t),..,g_{CHu}(\tau,t),..,g_{CHU}(\tau,t)$, einem Empfänger 3, der i.a. als Matched-Filter mit der Gewichtsfunktion $g_R(t)$ realisiert ist, einer Abtasteinheit 4 und einem gemischten Kanal-Daten-Schätzer 5 zugeführt. Das im erfindungsgemäßen iterativen Schätzer 5 implementierte erfindungsgemäße Verfahren zur Detektion von über einen zeitveränderlichen Übertragungskanal empfangenen Datensymbol-Sequenzen mit reduziertem Signalverarbeitungsaufwand ergibt sich aus dem Flussdiagramm der Fig. 5.

Im ersten Verfahrensschritt S10 wird die Kanalimpulsantworten $\underline{h}_1^{(k)},..,\underline{h}_u^{(k)},..,\underline{h}_U^{(k)}$ der Übertragungskanäle in einer Erstkanalschätzung ermittelt. Hierzu werden die Übertragungskanäle entweder einzeln für sich oder gemeinsam im Rahmen einer Joint-Kanalschätzung bevorzugt mit einer bekannten Trainingsdatensymbol-Sequenz der Länge $L_t$ beaufschlagt und aus dem empfangenen Datensymbol $r(k)$ unter Anwendung eines adaptiven Kanalschätzungsalgorithmuses jeweils ein Erstkanalschätzwert $\hat{\underline{h}}_1^{(0)},..,\hat{\underline{h}}_u^{(0)},..,\hat{\underline{h}}_U^{(0)}$ der Kanalimpulsantworten $\underline{h}_1^{(0)},..,\underline{h}_u^{(0)},..,\underline{h}_U^{(0)}$ zum Zeitpunkt 0 oder weiter zurückliegende Erstkanal Schätzwerte $\hat{\underline{h}}_1^{(-1)},..,\hat{\underline{h}}_u^{(-1)},..,\hat{\underline{h}}_U^{(-1)},\hat{\underline{h}}_1^{(-2)},..,\hat{\underline{h}}_u^{(-2)},..,\hat{\underline{h}}_U^{(-2)}$ der übertragungskanäle berechnet. Hierbei können Schätzalgorithmen ohne Berücksichtigung einer rauschbedingten Kanalstatistik wie beispielsweise Least-Squares-Algorithmen, Schätzalgorithmen mit Berücksichtigung einer rauschbedingten unbekannten Kanalstatistik wie beispielsweise Maximum-Likelihood-Verfahren oder Schätzalgorithmen mit Berücksichtigung einer rauschbedingten unbekannten Kanalstatistik wie beispielsweise der MMSE-Algorithmus Verwendung finden. Auch eine blinde oder semi-blinde Erstkanalschätzung ohne Verwendung einer Trainingsdatensymbol-Sequenz, die einzig aus der empfangenen Nutzdatensymbol-Sequenz die Kanäle schätzt, eignet sich für die Erstkanalschätzung.

Im nächsten Verfahrensschritt S20 werden die im erfindungsgemäßen Verfahren verwendeten skalaren und vektoriellen Variablen sowie Matrizen-Variablen initialisiert:

Da abhängig vom Zeitpunkt $k$ und von der Impulslänge $L_{h1},..,L_{hu},..,L_{hU}$ der Kanalimpulsantworten $\hat{\underline{h}}_1^{(k)},..,\hat{\underline{h}}_u^{(k)},..,\hat{\underline{h}}_U^{(k)}$ bestimmte Datensymbole $\hat{\underline{d}}_1(i),..,\hat{\underline{d}}_u(i),..,\hat{\underline{d}}_U(i)$ der geschätzten Datensymbol-Sequenzen $\hat{\underline{d}}_1^{(k)},..,\hat{\underline{d}}_u^{(k)},..,\hat{\underline{d}}_U^{(k)}$ in negativen Zeitpunkten $i$ liegen können, müssen diese vorab sinnvollerweise mit dem Wert 0 vorbelegt werden.

Die Elemente der Prädiktionsfehler-Korrelationsmatrix $K^{(k)}$, die die inverse Autokorrelationsmatrix der geschätzten Datensymbole $\hat{\underline{d}}_1^{(k)},..,\hat{\underline{d}}_u^{(k)},..,\hat{\underline{d}}_U^{(k)}$ darstellt, kann entweder mit konstanten Werten, beispielsweise mit dem groben Schätzwert γ für den Signal-Rauschabstand $\dfrac{E_b}{N_0}$ im jeweiligen Übertragungskanal, gewichtet mit der inversen Impulslänge $L_{h1}^{-1},..,L_{hu}^{-1},...,L_{hU}^{-1}$ der jeweiligen Kanalimpulsantwort $\underline{h}_1^{(k)},..,\underline{h}_u^{(k)},...,\underline{h}_U^{(k)}$, belegt werden oder aus den in der Erstkanalschätzung ermittelten Autokorrelationskoeffizienten der Trainingsdatensymbol-Sequenz oder der im Fall einer blinden Erstkanalschätzung benutzten Nutzdatensymbol-Sequenz berechnet werden.

Daraufhin beginnt die Iterationsschleife des erfindungsgemäßen Verfahrens mit Verfahrensschritt S30. In Verfahrensschritt S30 wird der a-priori-Schätzfehler $e^{(k|k-1)}$ unter Verwendung einer zum Zeitpunkt $k$-1 geschätzten Kanalimpulsantwort $\underline{\hat{h}}_1^{(k-1)},..,\underline{\hat{h}}_u^{(k-1)},...,\underline{\hat{h}}_U^{(k-1)}$ gemäß Gleichung (31) und der a-posteriori-Schätzfehler $e^{(k|k)}$ unter Verwendung einer zum Zeitpunkt $k$ geschätzten Kanalimpulsantwort $\underline{\hat{h}}_1^{(k)},..,\underline{\hat{h}}_u^{(k)},...,\underline{\hat{h}}_U^{(k)}$ gemäß Gleichung (31) berechnet. Alternativ kann auch jeder andere a-priori-Schätzfehler $e^{(k|k-n)}$ unter Verwendung einer zu einem früheren Zeitpunkt $k - n$ geschätzten Kanalimpulsantwort $\underline{\hat{h}}_1^{(k-n)},..,\underline{\hat{h}}_u^{(k-n)},...,\underline{\hat{h}}_U^{(k-n)}$ gemäß Gleichung (47) berechnet werden.

Im Fall einer erstmaligen Durchführung des Verfahrensschritts S30 wird hierzu das im Zeitpunkt 0 empfangene Datensymbol $r(0)$, der in Verfahrensschritt S20 vorbelegte Vektor der geschätzten Datensymbol-Sequenz $\underline{\tilde{d}}^{(0)}$ und der in der Erstkanalschätzung gemäß Verfahrensschritt S10 ermittelte Schätzwerte $\underline{\hat{h}}_1^{(0)},..,\underline{\hat{h}}_u^{(0)},...,\underline{\hat{h}}_U^{(0)}, \underline{\hat{h}}_1^{(-1)},..,\underline{\hat{h}}_u^{(-1)},...,\underline{\hat{h}}_U^{(-1)}, \underline{\hat{h}}_1^{(-2)},..,\underline{\hat{h}}_u^{(-2)},...,\underline{\hat{h}}_U^{(-2)}$, usw. der Kanalimpulsantworten zu den Zeitpunkten 0, -1, -2 usw. verwendet.

Im Fall einer bereits mehrmals durchlaufenen Iteration werden hierzu das im Zeitpunkt $k$ empfangene Datensymbol $r(k)$, die in Verfahrensschritt S60 in den einzelnen Zeitpunkten $k - 1$, $k - 2$, $k-3$ usw. jeweils geschätzten Datensymbole $\underline{\hat{d}}_1(k-1),..,\underline{\hat{d}}_u(k-1),..,\underline{\hat{d}}_U(k-1), \underline{\hat{d}}_1(k-2),..,\underline{\hat{d}}_u(k-2),..,\underline{\hat{d}}_U(k-2), \underline{\hat{d}}_1(k-3),..,\underline{\hat{d}}_u(k-3),..,\underline{\hat{d}}_U(k-3)$, usw. der bis zum Zeitpunkt $k - 1$ gesendeten Datensymbol-Sequenz $\underline{\hat{d}}_1^{(k)},..,\underline{\hat{d}}_u^{(k)},..,\underline{\hat{d}}_U^{(k)}$, für den Zeitpunkt $k$ jeweils jedes im Datensymbolalphabet des verwendeten Modulationsverfahrens enthaltene Datensymbol $d(k)$ und die in Verfahrensschritt S70 zum Zeitpunkt $k - 1$ bzw. zu früheren Zeitpunkten $k-2, k-3$ usw. ermittelten Schätzwerte $\underline{\hat{h}}_1^{(k-1)},..,\underline{\hat{h}}_u^{(k-1)},..,\underline{\hat{h}}_U^{(k-1)}, \underline{\hat{h}}_1^{(k-2)},..,\underline{\hat{h}}_u^{(k-2)},..,\underline{\hat{h}}_U^{(k-2)}, \underline{\hat{h}}_1^{(k-3)},..,\underline{\hat{h}}_u^{(k-3)},..,\underline{\hat{h}}_U^{(k-3)}$, usw. der Kanalimpuls-antworten $\underline{\hat{h}}_1^{(k)},..,\underline{\hat{h}}_u^{(k)},..,\underline{\hat{h}}_U^{(k)}$ verwendet.

Im darauf folgenden Verfahrensschritt S40 wird die Metrik $\tilde{M}^{(0)}$ zum Zeitpunkt 0 im Fall eines erstmaligen Durchlaufens der Iteration und die Metrik $\tilde{M}^{(k)}$ zum Zeitpunkt $k$ im Fall eines schon mehrmaligen Durchlaufens der Iteration aus der initialisierten Metrik $\tilde{M}^{(-1)}$ im Fall eines erstmaligen Durchlaufens der Iteration und aus der im vorherigen Zeitpunkt $k - 1$ iterativ ermittelten Metrik $\tilde{M}^{(k-1)}$ zuzüglich der jeweils für jedes mögliche Datensymbol $d(k)$ des Datensymbolalphabets zum Zeitpunkt $k$ ermittelten Zweigmetrik berechnet, die sich aus dem Produkt $e^{(k|k-1)} \cdot e^{(k|k)}$ des in Verfahrensschritt 30 berechneten a-priori-Schätzfehlers $e^{(k|k-1)}$ und a-posteriori-Schätzfehlers $e^{(k|k)}$ ermitteln lässt.

Hierbei kann die iterative Berechnungsformel für die Pfadmetrik $\tilde{M}^{(k)}$ der Gleichung (35), die iterative Berechnungsformel für die Pfadmetrik $\tilde{M}^{(k)}$ der Gleichung (40) unter Verwendung des Vergessensfaktors $\mu$ für zeitlich weiter zurückliegende Zweigmetriken, die iterative Berechnungsformel für die Pfadmetrik $\tilde{M}^{(k)}$ gemäß Gleichung (43) mit abschließender Betragsbildung der berechneten Pfadmetrik $\tilde{M}^{(k)}$, die iterative Berechnungsformel für die Pfadmetrik $\tilde{M}^{(k)}$ gemäß Gleichung (44) mit abschließender Realteilbildung der berechneten Pfadmetrik $\tilde{M}^{(k)}$, die iterative Berechnungsformel für die Pfadmetrik $\tilde{M}^{(k)}$ gemäß Gleichung (45) mit einer Betragsbildung der im jeweiligen Iterationsschritt für jedes Datensymbol $d(k)$ des Datensymbolalphabets ermittelten Zweigmetrik und die iterative Berechnungsformel für die Pfadmetrik $\tilde{M}^{(k)}$ gemäß Gleichung (46) mit einer Realteilbildung der im jeweiligen Iterationsschritt für jedes Datensymbol $d$ $(k)$ des Datensymbolalphabets ermittelten Zweigmetrik verwendet werden.

Alternativ kann die Pfadmetrik $d(k)$ jeweils nach einer der iterativen Berechnungsformeln gemäß der Gleichungen (48) bis (51) berechnet werden, in denen die jeweiligen Zweigmetriken aus a-priori-Schätzfehlern $e^{(k|k-n)}$ und $e^{(k|k-m)}$ zu früheren Zeitpunkten $k - n$ und $k - m$ berechnet werden

Im nächsten Verfahrensschritt S50 wird gemäß Gleichung (57) und (58) der Erweiterungsterm $\delta(k)$ und darauf aufbauend die erweiterte Metrik $\overline{\overline{M}}^{(k)}$ berechnet. Unter Verwendung eines Gewichtungsfaktors w gemäß Gleichung (59) kann eine unterschiedliche Gewichtung zwischen der iterativ ermittelten Metrik $\tilde{M}^{(k)}$ und dem Erweiterungsterm $\delta$ $(k)$ bei der Berechnung der erweiterten Metrik $\overline{\overline{M}}^{(k)}$ verwirklicht werden.

Im darauf folgenden Verfahrensschritt S60 werden aus der für jedes Datensymbol $d(k)$ des im verwendeten Modulationsverfahren benutzten Datensymbolalphabets im Zeitpunkt $k$ jeweils berechneten erweiterten Metrik $\overline{\overline{M}}^{(k)}$ mittels eines Deepth-first- oder eines Breadth-first-Verfahrens die jeweils minimalen erweiterten Metriken $\overline{\overline{M}}^{(k)}$ ermittelt und damit das Datensymbol $\underline{\hat{d}}_1(k),..,\underline{\hat{d}}_u(k),..,\underline{\hat{d}}_U(k)$ zum Zeitpunkt $k$ in den einzelnen "Überlebenspfaden" geschätzt.

Bei Verwendung eines Breadth-first-Verfahrens kann hierbei ausgehend vom im vorherigen Zeitpunkt $k - 1$ für den jeweiligen "Überlebenspfad" ausgewählten Zustand $S_i$ in Anlehnung an den Viterbi-Algorithmus derjenige im Zeitpunkt $k$ nachfolgende Zustand $S_i$ und damit das diesen Zustand $S_i$ charakterisierende geschätzte Datensymbol $\hat{\underline{d}}_1(k),..,$ $\underline{\hat{d}}_u(k),..,\underline{\hat{d}}_U(k)$ zum Zeitpunkt $k$ ausgewählt werden, das die kleinste Zweigmetrik aufweist. Auf diese Weise wird von jedem einzelnen im Zeitpunkt $k$ - 1 ausgewählten Zustand $S_i$ wieder jeweils ein einziger Zustand $S_i$ im Zeitpunkt $k$ ausgewählt und in den jeweiligen "Überlebenspfad" zum Zeitpunkt $k$ fortgesetzt. Alternativ können aber auch - wie in Fig. 1 dargestellt ist - Zustände $S_i$ ausgewählt werden, die jeweils die kleinsten Pfadmetriken aufweisen. Auf diese Weise können von einem im Zeitpunkt $k$ - 1 ausgewählten Zustand $S_i$ entweder mehrere Zustände $S_i$, ein einziger Zustand $S_i$ oder kein Zustand $S_i$ im Zeitpunkt $k$ ausgewählt werden. Bei beiden Varianten kann sich die Anzahl der ausgewählten Zustände $S_i$ im Zeitpunkt $k$ gegenüber den im Zeitpunkt $k$ - 1 ausgewählten Zuständen $S_i$ reduzieren, wenn sich mehrere im Zeitpunkt $k$ - 1 in jeweils einem unterschiedlichen Zustand $S_i$ befindliche "Überlebenspfade" in einem einzigen Zustand $S_i$ zum Zeitpunkt $k$ vereinigen.

Im Falle eines Deepth-first-Verfahrens wird das Trellis-Diagramm zuerst "in der Tiefe" analysiert, indem ein "Überlebenspfad" über so viele Zeitpunkte $k$ iterativ verfolgt wird, bis die jeweilige Pfadmetrik $\overline{\overline{M}}^{(k)}$ einen vorgegebenen Schwellenwert überschreitet. Bei Überschreitung des Schwellenwerts durch die jeweilige Pfadmetrik $\overline{\overline{M}}^{(k)}$ werden auf dem "Überlebenspfad" so viele Zeitpunkte $k$ zurückgeschritten, bis ein Verzweigungspfad gefunden ist, dessen Zweigmetrik zu einer Pfadmetrik $\overline{\overline{M}}^{(k)}$ führt, die unterhalb des vorgegebenen Schwellenwert liegt. Dieser Verzweigungspfad wird wiederum solange weiterverfolgt, bis die jeweilige Pfadmetrik $\overline{\overline{M}}^{(k)}$ wieder den vorgegebenen Schwellenwert überschreitet und durch Zurückschreiten im ausgewählten "Überlebenspfad" wiederum ein weiterer Verzweigungspfad gefunden ist, der zu einer gegenüber dem vorgegebenen Schwellenwert kleineren Pfadmetrik $\overline{\overline{M}}^{(k)}$ führt. Diese Vorgehensweise wird solange verfolgt, bis das Trellis-Diagramm bis zu einem vorgegebenen Zeitpunkt $k$ mit einem gefundenen "Überlebenspfad" durchlaufen ist.

Im Fall, dass mindestens ein Signal eine deutlich höhere Signalleistung als das übrige Signal bzw. die übrigen Signale aufweist, wird auf der Basis des vorab ermittelten Verhältnisses der Signalleistungen des leistungsstärksten Signals bzw. der leistungsstärksten Signale zu den Signalleistungen des leistungsschwächeren Signals bzw. der leistungsschwächeren Signale die gegenüber der Mächtigkeit $M$ des Symbolalphabets reduzierte Anzahl $M'$ von Datensymbolen-Hypothesen festgelegt, die bei der Schätzung eines Datensymbols innerhalb der Datensymbol-Sequenzen von leistungsschwächeren Signalen berücksichtigt wird. Die Ermittlung des Verhältnisses der Signalleistungen des leistungsstärksten Signals bzw. der leistungsstärksten Signale zu den Signalleistungen des leistungsschwächeren Signals bzw. der leistungsschwächeren Signale - so genanntes Carrier-to-Inferer-Ratio (CIR) - wird durch Messung der Signalleistung der Kanalimpulsantwort des das jeweilige leistungsschwache bzw. leistungsstarke Signal übertragenden Übertragungskanals ermittelt. Die reduzierte Anzahl $M'$ von bei leistungsschwächeren Signalen zu berücksichtigenden Datensymbolen-Hypothesen ist indirekt proportional zum ermittelten Carrier-to-Inferer-Ratio-Wert festzulegen. Im Trellis-Diagramm werden bei der Signalentzerrung im jeweiligen Zeitpunkt $k$ nur diejenigen Zustände $S_i$ ausgewählt, die zu einer Anzahl ($M'$) von Datensymbolhypothesen mit den jeweils kleinsten euklidischen Distanzen zum empfangenen Datensymbol ($d_1(k),..,d_u(k),..,d_U(k)$ für jedes leistungsschwächere Signal gehören. Aus dem Trellis-Diagramm in Fig. 2 mit einem leistungsstarken Signal $\underline{d}_1$ und den beiden leistungsschwächeren Signalen $\underline{d}_2$ und $\underline{d}_3$, die alle in einem Modulationsverfahren mit der Mächtigkeit $M$ = 4 - beispielsweise QPSK - moduliert sind, ist ersichtlich, dass in jedem Zeitpunkt $k$ jeweils die Datensymbolhypothese des leistungsstarken Signals $\underline{d}_1$ mit der minimalen Metrik - in k = $L_t$ : Datensymbolhypothese $d_1$ = 01; in $k = L_t$ +1 : Datensymbolhypothese $d_1$ = 00 - und die $M'$ = 2 Datensymbolhypothesen mit der minimalen Metrik für jeweils jedes leistungsschwache Signal $\underline{d}_2$ und $\underline{d}_3$ - in $k=L_t$ : Datensymbolhypothese $d_2$ = 00 und $d_2$ = 01 bzw. $d_3$ = 00 und $d_3$ = 11; in $k = L_t$ +1 : Datensymbolhypothese $d_2$ = 01 und $d_2$ = 11 bzw. $d_3$ = 00 und $d_3$ = 01 - ausgewählt werden.

Im nächsten Verfahrensschritt S70 wird die Kalman-Verstärkung $g^{(k)}$ gemäß Gleichung (37) bzw. gemäß Gleichung (42) bei Verwendung des Vergessensfaktors $\mu$ zur geringeren Gewichtung früher gesendeter Datensymbole ($d_1(k),..,d_u(k),..,d_U(k)$ gegenüber aktueller gesendeten Datensymbolen ($\hat{d}_1(k),..,\hat{d}_u(k),..,d_U(k)$ berechnet. Hierzu wird die für den jeweiligen "Überlebenspfad" ermittelten Schätzungen $\underline{\hat{d}}_1(k),..,\underline{\hat{d}}_u(k),..,\underline{\hat{d}}_U(k)$ der bis zum Zeitpunkt $k$ gesendeten Datensymbol-Sequenzen $\underline{d}_1^{(k)},..,\underline{d}_u^{(k)},..,\underline{d}_U^{(k)}$ mit dem im vorherigen Verfahrensschritt S60 für den jeweiligen "Überlebenspfad" geschätzten Datensymbolen $\hat{\underline{d}}_1(k),..,\hat{\underline{d}}_u(k),..,\hat{\underline{d}}_U(k)$ zum Zeitpunkt $k$ und die Prädiktionsfehler-Korrelationsmatrix $K^{(k-1)}$ zum vorherigen Zeitpunkt $k$ - 1 verwendet. Diese Prädiktionsfehler-Korrelationsmatrix $K^{(k-1)}$ weist beim erstmaligen Durchlauf der Iteration die in Verfahrensschritt S20 initialisierten Werte und bei schon mehrmaligen Durchlauf der Iteration die in der letzten Iteration in Verfahrensschritt S70 iterativ ermittelten Werte der Korrelationsmatrix $K^{(k-1)}$

zum Zeitpunkt k-1 auf.

Mit der auf diese Weise ermittelten Kalman-Verstärkung $g^{(k)}$ zum Zeitpunkt $k$ und der Prädiktionsfehler-Korrelationsmatrix $K^{(k-1)}$ zum Zeitpunkt k-1 wird ebenfalls in Verfahrensschritt S70 die Prädiktionsfehler-Korrelationsmatrix $K^{(k)}$ zum Zeitpunkt $k$ iterativ berechnet.

Schließlich wird in Verfahrensschritt S70 mit der soeben ermittelten Kalman-Verstärkung $g^{(k)}$ und des in Verfahrensschritt S30 berechneten a-priori-Schätzfehlers $e^{(k|k-1)}$ auf der Basis der Schätzwerte $\hat{\underline{h}}_1^{(k-1)},..,\hat{\underline{h}}_u^{(k-1)},..,\hat{\underline{h}}_U^{(k-1)}$, der Kanalimpulsantworten $\underline{h}^{(k)}$ zum Zeitpunkt $k$ - 1 der Schätzwert $\underline{h}^{(k)}$ der Kanalimpulsantworten $\underline{h}_1^{(k)},..,\underline{h}_u^{(k)},..,\underline{h}_U^{(k)}$ zum Zeitpunkt $k$ iterativ berechnet. Die Schätzwerte $\underline{h}^{(k-1)}$ der Kanalimpulsantworten $\underline{h}_1^{(k-1)},..,\underline{h}_u^{(k-1)},..,\underline{h}_U^{(k)}$ zum Zeitpunkt $k$-1 ergibt sich bei erstmaligen Durchlauf der Iteration aus den in der Erstkanalschätzung in Verfahrensschritt S10 ermittelten Schätzwerten $\hat{\underline{h}}_1^{(-1)},..,\hat{\underline{h}}_u^{(-1)},..,\hat{\underline{h}}_U^{(-1)}$ der Kanalimpulsantworten $\hat{\underline{h}}_1^{(k)},..,\hat{\underline{h}}_u^{(k)},..,\hat{\underline{h}}_U^{(k)}$, zum Zeitpunkt -1 und bei bereits mehrmaligen Durchlauf der Iteration aus den in der letzten Iteration in Verfahrensschritt S70 iterativ ermittelten Schätzwerten $\hat{\underline{h}}_1^{(k-1)},..,\hat{\underline{h}}_u^{(k-1)},..,\hat{\underline{h}}_U^{(k-1)}$, der Kanalimpulsantworten $\underline{h}_1^{(k-1)},..,\underline{h}_u^{(k-1)},..,\underline{h}_U^{(k)}$, zum Zeitpunkte $k$ - 1.

In Verfahrensschritt S80 wird ermittelt, ob die Schätzungen der Datensymbol-Sequenzen $\underline{d}_1^{(k)},..,\underline{d}_u^{(k)},..,\underline{d}_U^{(k)}$, abgeschlossen sind. Dies ist der Fall, wenn nach einer bestimmten Anzahl von Iterationen sich alle vorhandenen "Überlebenspfade" endgültig in einem Zustand $S_i$ des Trellis-Diagramms zu einem bestimmten Zeitpunkt $k$ zu einem einzigen "Überlebenspfad" vereinigt haben und das erfindungsgemäße Verfahren abgeschlossen ist.

Falls dieses Ereignis noch nicht eingetreten ist, so wird in Verfahrensschritten S90 der nächste Zeitpunkt $k$ + 1 abgewartet und die nächste Iteration mit Verfahrensschritt S30 begonnen.

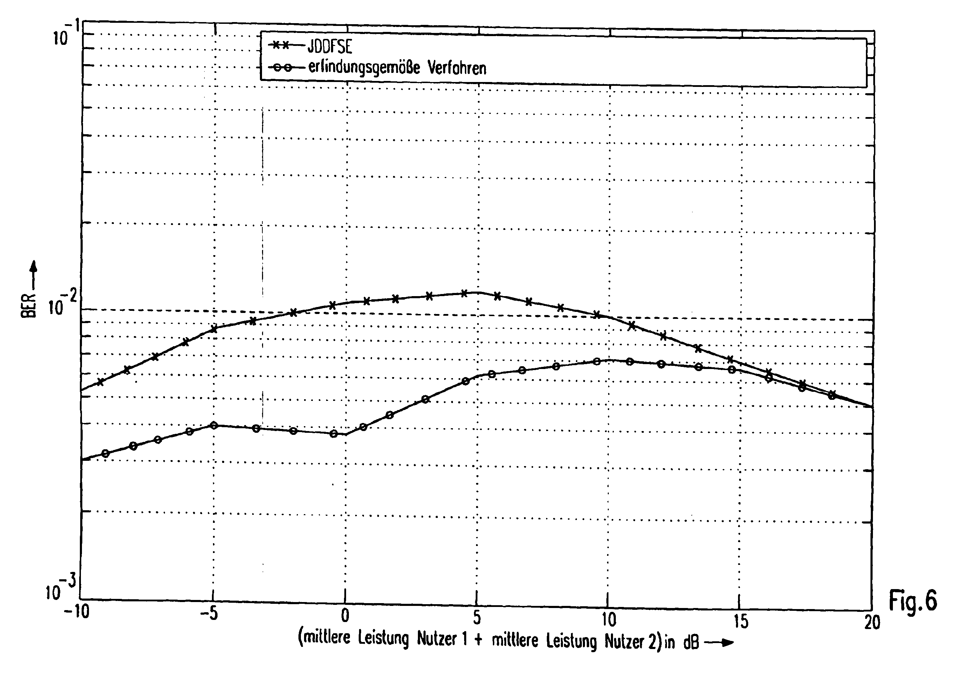

In Kurve 1 der Fig. 6 ist die Bitfehlerrate - *BER* (Bit error rate) - als Funktion der mittleren Leistung des ersten und zweiten Senders (U=2) eines JDDFSE (Joint-Delayed-Decision-Feedback-Sequence-Estimation)-Verfahrens mit symbolweise arbeitenden Vorfilter, das ein Verfahren zur gleichzeitigen Schätzung mehrerer zeitveränderlicher Übertragungskanäle und der über jeweils einen der Übertragungskanäle gesendeten Datensymbol-Sequenzen $\underline{d}_1^{(k)},..,\underline{d}_u^{(k)},..,\underline{d}_U^{(k)}$, nach dem Stand der Technik darstellt, und in Kurve 2 der Fig. 6 die Bitfehlerrate *BER* als Funktion der mittleren Leistung des ersten und zweiten Senders eines erfindungsgemäßen Verfahren zur Detektion von mehreren gesendeten und über jeweils einen zeitveränderlichen Übertragungskanal übertragenen Datensymbol-Sequenzen aus einem Empfangssignal ohne Vorfilter dargestellt.

Hierbei liegt in beiden Fällen ein uncodiertes 8-PSKmoduliertes Übertragungssignal nach dem GSM/EDGE-Standard, das von zwei Sendern abgestrahlt wird (U=2), ein Signal-Rausch-Abstand $\dfrac{E_b}{N_0}$ von 30 dB, eine städtische UmgebungTU (typical urban) - und eine Geschwindigkeit des Empfängers von 0 km/h vor. Beim JDDFSE-Verfahren sind 64 Zustände, beim erfindungsgemäßen Verfahren 24 Zustände vorgesehen.

Deutlich zu erkennen ist die niedrigere Bitfehlerrate des erfindungsgemäßen Verfahrens gegenüber dem Verfahren nach dem Stand der Technik (JDDFSE) insbesondere bei niedrigeren Sendeleistungen der beiden Sender 1 und 2.

Die Erfindung ist nicht auf die dargestellte Ausführungsformen beschränkt. Insbesondere sind alternativ zum RLS-Algorithmus als adaptives Kanalschätzverfahren andere rekursive Kanalschätzverfahren wie Kalman-Algorithmen oder affine Projektions-Algorithmen, wie beispielsweise der NLMS(Normalized-Least-Mean-Square)-Algorithmus, von der Erfindung abgedeckt.

**Patentansprüche**

1. Verfahren zur Detektion von mindestens einer zu jeweils einem über jeweils einen zeitveränderlichen Übertragungskanal übertragenen Signal gehörigen gesendeten Datensymbol-Sequenz $(\underline{d}_1^{(k)},..,\underline{d}_u^{(k)},..,\underline{d}_U^{(k)})$ aus einer zu einem einzigen Empfangssignal gehörigen empfangenen Datensymbol-Sequenz $(\underline{r}^{(k)})$, bei dem für jeden Zeitpunkt $(k)$ im Wechsel die Impulsantwort $(\underline{h}_1^{(k)},..,\underline{h}_u^{(k)},..,\underline{h}_U^{(k)})$ des jeweiligen Übertragungskanals und das jeweils aktuell gesendete Datensymbol $(d_1(k),..,d_2(k),..,d_U(k))$ geschätzt wird, wobei zur Schätzung des im aktuellen Zeitpunkt $(k)$ jeweils gesendeten Datensymbols $(d_1(k),..,d_2(k),..,d_U(k))$ diejenigen Zustände $(S_i)$ im Zustandsdiagramm ausgewählt werden, deren iterativ berechnete, aus jeweils einer Pfadmetrik $(\tilde{M}^{(k)})$ und einem Erweiterungsterm $(\delta(k))$ bestehende erweiterte Metriken $(\overline{\overline{M}}^{(k)})$ minimal sind, **dadurch gekennzeichnet, dass** sich der Zähler des Erweiterungsterms $(\delta(k))$ einzig aus der Differenz zwischen den in zukünftigen Zeitpunkten $(k$ + 1, $k$ + 2, $k$ + 3,..$)$ empfangenen Datensymbolen $(r(k$ + 1$), r(k$ + 2$), r(k$+3$)$ , ..$)$ und den mit der zum aktuellen Zeitpunkt $(k)$ geschätzten Impulsantwort $(\hat{\underline{h}}_1^{(k)},..,\hat{\underline{h}}_u^{(k)},..,\hat{\underline{h}}_U^{(k)})$ des jeweiligen Übertragungskanals gewichteten Schätzungen $(\hat{\underline{d}}_1^{(k)},..,\hat{\underline{d}}_u^{(k)},..,\hat{\underline{d}}_U^{(k)})$ der bis zum aktuellen Zeitpunkt $(k)$ jeweils gesendeten Datensymbol-Sequenz $(\underline{d}_1^{(k)},..,\underline{d}_u^{(k)},..,\underline{d}_U^{(k)})$ ergibt.

**2.** Verfahren zur Detektion nach Anspruch 1,
**dadurch gekennzeichnet,**
**dass** die Metrik ($\tilde{M}^{(k)}$) eines Zustands ($S_i$) im aktuellen Zeitpunkt ($k$) aus der erweiterten Pfadmetrik ($\tilde{M}^{(k-1)}$) des jeweils vorausgehenden Zustands ($S_i$) zuzüglich einer Zweigmetrik zwischen dem jeweils vorausgehenden Zustand ($S_i$) im vorhergehenden Zeitpunkt ($k$ - 1) und dem Zustand ($S_i$) im aktuellen Zeitpunkt ($k$) iterativ berechnet wird.

**3.** Verfahren zur Detektion nach Anspruch 2,
**dadurch gekennzeichnet,**
**dass** die Zweigmetrik zwischen dem jeweils vorausgehenden Zustand ($S_i$) im vorhergehenden Zeitpunkt ($k$ - 1) und dem Zustand ($S_i$) im aktuellen Zeitpunkt ($k$) eine Funktion eines Produkts ($e^{(k/k-n)} \cdot e^{(k/k-m)}$; ($e^{(k/k-n)} \cdot e^{(k/k)}$) aus einem ersten a-priori-Schätzfehler ($e^{(k/k-n)}$) und einem zweiten a-priori-Schätzfehler ($e^{(k/k-m)}$) oder einem a-posteriori-Schätzfehler ($e^{(k/k)}$) berücksichtigt, wobei der erste a-priori-Schätzfehler ($e^{(k/k-n)}$), der zweite a-priori-Schätzfehler ($e^{(k/k-m)}$) und der a-posteriori-Schätzfehler ($e^{(k/k)}$) jeweils zwischen der bis zum aktuellen Zeitpunkt ($k$) empfangenen Datensymbol-Sequenz ($\underline{r}^{(k)}$) und der Schätzung ($\underline{\hat{d}}_1^{(k)T} \cdot \underline{\hat{h}}_1^{(k)} + .. + \underline{\hat{d}}_u^{(k)T} \cdot \underline{\hat{h}}_u^{(k)} + ..+ \underline{\hat{d}}_U^{(k)T} \cdot \underline{\hat{h}}_U^{(k)}$) der bis zum aktuellen Zeitpunkt ($k$) empfangenen Datensymbol-Sequenz ($\underline{r}^{(k)}$) ermittelt wird.

**4.** Verfahren zur Detektion nach Anspruch 3,
**dadurch gekennzeichnet,**
**dass** die Funktion eine Betragsbildungsfunktion ist.

**5.** Verfahren zur Detektion nach Anspruch 3,
**dadurch gekennzeichnet,**
**dass** die Funktion eine Realteilbildungsfunktion ist.

**6.** Verfahren zur Detektion nach einem der Ansprüche 3 bis 5,
**dadurch gekennzeichnet,**
**dass** die Schätzung

$$( \underline{\hat{d}}_1^{(k)^T} \cdot \underline{\hat{h}}_1^{(k-n)} + .. + \underline{\hat{d}}_u^{(k)^T} \cdot \underline{\hat{h}}_u^{(k-n)} + .. + \underline{\hat{d}}_U^{(k)^T} \cdot \underline{\hat{h}}_U^{(k-n)} ,$$

$$\underline{\hat{d}}_1^{(k)^T} \cdot \underline{\hat{h}}_1^{(k-1)} + .. + \underline{\hat{d}}_u^{(k)^T} \cdot \underline{\hat{h}}_u^{(k-1)} + .. + \underline{\hat{d}}_U^{(k)^T} \cdot \underline{\hat{h}}_U^{(k-1)} ;$$

$$\underline{\hat{d}}_1^{(k)^T} \cdot \underline{\hat{h}}_1^{(k-m)} + .. + \underline{\hat{d}}_u^{(k)^T} \cdot \underline{\hat{h}}_u^{(k-m)} + .. + \underline{\hat{d}}_U^{(k)^T} \cdot \underline{\hat{h}}_U^{(k-m)} ;$$

($\underline{\hat{d}}_1^{(k)T} \cdot \underline{\hat{h}}_1^{(k)} + .. + \underline{\hat{d}}_u^{(k)T} \cdot \underline{\hat{h}}_u^{(k)} + ..+ \underline{\hat{d}}_U^{(k)T} \cdot \underline{\hat{h}}_U^{(k)}$)
der bis zum aktuellen Zeitpunkt ($k$) empfangenen Datensymbol-Sequenz ($\underline{r}^{(k)}$ des ersten a-priori-Schätzfehlers ($e^{(k/k-n)}$), ($e^{(k/k-1)}$), des zweiten a-priori-Schätzfehlers ($e^{(k/k-m)}$) und des a-posteriori-Schätzfehlers ($e^{(k/k)}$) aus der mit einer zu einem ersten bzw. zweiten Zeitpunkt ($k$ - $n$, $k$ - 1 ; $k$ - $m$ ; $k$) geschätzten Impulsantwort ($\underline{\hat{h}}_1^{(k-n)}, .., \underline{\hat{h}}_u^{(k-n)}, .., \underline{\hat{h}}_U^{(k-n)}, \underline{\hat{h}}_1^{(k-1)}, .., \underline{\hat{h}}_u^{(k-1)}, ..\underline{\hat{h}}_U^{(k-1)}; \underline{\hat{h}}_1^{(k-m)}, .., \underline{\hat{h}}_u^{(k-m)}, .., \underline{\hat{h}}_U^{(k-m)}; \underline{\hat{h}}_1^{(k)}, .., \underline{\hat{h}}_u^{(k)}, .. \underline{\hat{h}}_U^{(k)}$) des jeweiligen Übertragungskanals gewichteten Schätzung ($\underline{\hat{d}}_1^{(k)}, .., \underline{\hat{d}}_u^{(k)}, .., \underline{\hat{d}}_U^{(k)}$) der bis zum aktuellen Zeitpunkt ($k$) gesendeten Datensymbol-Sequenz ($\underline{d}_1^{(k)}, .., \underline{d}_u^{(k)}, .., \underline{d}_U^{(k)}$) ermittelt wird.

**7.** Verfahren zur Detektion nach Anspruch 6,
**dadurch gekennzeichnet,**
**dass** der erste Zeitpunkt ($k$ - $n$, $k$ - 1) des ersten a-priori-Schätzfehlers ($e^{(k/k-n)}$, $e^{(k/k-1)}$) ein zum aktuellen Zeitpunkt ($k$) um $n$ Zeitpunkte vorausgehender Zeitpunkt ($k$ - $n$) und der zweite Zeitpunkt ($k$ - $m$) des zweiten a-priori-Schätzfehlers $e^{(k/k-m)}$ ein zum aktuellen Zeitpunkt ($k$) um $m$ Zeitpunkte vorausgehender Zeitpunkt ($k$ - $m$) ist.

**8.** Verfahren zur Detektion nach einem der Ansprüche 1 bis 7,
**dadurch gekennzeichnet,**
**dass** bei der iterativ berechneten Metrik ($\tilde{M}^{(k)}$) früher gesendete Datensymbole ($d_1^{(k)}, .., d_2^{(k)}, .., d_U^{(k)}$) schwächer als später gesendete Datensymbole ($d_1^{(k)}, .., d_2^{(k)}, .., d_U^{(k)}$) gewichtet werden.

**9.** Verfahren zur Detektion nach einem der Ansprüche 1 bis 8,
**dadurch gekennzeichnet,**
**dass** zur Schätzung der bis zum aktuellen Zeitpunkt ($k$) jeweils gesendeten Datensymbol-Sequenz ($\underline{d}_1^{(k)},..,\underline{d}_u^{(k)},..,\underline{d}_U^{(k)}$) ein Pfad sukzessive aus aufeinander folgenden Zuständen ($S_i$) ausgewählt wird, solange die erweiterte Pfad-metrik $(\overline{\overline{M}}^{(k)})$ des zuletzt ausgewählten Zustands ($S_i$) kleiner als ein Schwellwert ist, und andernfalls der Pfad iterativ in einem der zuvor ausgewählten Zustände ($S_i$) mit einem alternativen Zustand ($S_i$) bzw. dessen nachfol-genden Zuständen ($S_i$) fortgeführt wird, falls deren erweiterte Pfadmetriken $(\overline{\overline{M}}^{(k)})$ kleiner als der Schwellwert sind.

**10.** Verfahren zur Detektion nach einem der Ansprüche 1 bis 8,
**dadurch gekennzeichnet,**
**dass** diejenigen Zustände ($S_i$) im aktuellen Zeitpunkt ($k$) ausgewählt werden, die von allen Zuständen ($S_i$) im aktuellen Zeitpunkt ($k$) eine minimale erweiterte Pfadmetrik $(\overline{\overline{M}}^{(k)})$ aufweisen.

**11.** Verfahren zur Detektion nach einem der Ansprüche 1 bis 8,
**dadurch gekennzeichnet,**
**dass** diejenigen Zustände ($S_i$) im aktuellen Zeitpunkt ($k$) ausgewählt werden, die von all denjenigen Zuständen ($S_i$), die jeweils einen gemeinsamen Vorgängerzustand ($S_i$) im vorherigen Zeitpunkt ($k$ - 1) aufweisen, im aktuellen Zeitpunkt ($k$) eine minimale erweiterte Pfadmetrik $(\overline{\overline{M}}^{(k)})$ aufweisen.

**12.** Verfahren zur Detektion nach Anspruch 10 oder 11,
**dadurch gekennzeichnet,**
**dass** im Fall eines großen Unterschiedes in der Signalleistung zwischen leistungsschwächeren und leistungsstärkeren Signalen nur diejenigen Zustände ($S_i$) im aktuellen Zeitpunkt ($k$) weiterverfolgt werden, die zu einer Anzahl ($M'$) von Datensymbolhypothesen mit den jeweils kleinsten euklidischen Distanzen zum empfangenen Datensymbol ($d_1(k),..,d_u(k),..,d_U(k)$) für jedes leistungsschwächere Signal gehören.

**13.** Verfahren zur Detektion nach Anspruch 12,
**dadurch gekennzeichnet,**
**dass** zur Ermittlung der Anzahl ($M'$) von Datensymbolhypothesen mit den jeweils kleinsten euklidischen Distanzen zum empfangenen Datensymbol ($d_1(k),..,d_u(k),..,d_U(k)$) für jedes leistungsschwächere Signal im Zeitpunkt ($k$) das Verhältnis der gemessenen Signalleistung des/der leistungsstärkeren Signals/e zur gemessenen Signalleistung des/der leistungsschwächeren Signals/e ermittelt wird.

**14.** Verfahren zur Detektion nach Anspruch 13,
**dadurch gekennzeichnet,**
**dass** die Anzahl ($M'$) umgekehrt proportional zum Verhältnis der gemessenen Signalleistung des/der leistungsstärkeren Signals/e zur gemessenen Signalleistung des/der leistungsschwächeren Signale vorgegeben wird.

**15.** Verfahren zur Detektion nach Anspruch 13 oder 14,
**dadurch gekennzeichnet,**
**dass** die Signalleistung eines über einen Übertragungskanal übertragenen Signals durch Ermittlung der Signalleistung der zum jeweiligen Übertragungskanal gehörigen Kanalimpulsantwort gemessen wird.

**16.** Verfahren zur Detektion nach einem der Ansprüche 1 bis 15,
**dadurch gekennzeichnet,**
**dass** die Kanalschätzungshypothese ($\hat{\underline{h}}_1^{(k)},..,\hat{\underline{h}}_u^{(k)},..,\hat{\underline{h}}_U^{(k)}$) zum aktuellen Zeitpunkt ($k$) iterativ über ein adaptives rekursives Kanalschätzungsverfahren aus einer im vorhergehenden Zeitpunkt ($k$ - 1) geschätzten Kanalschätzungs-hypothese ($\hat{\underline{h}}_1^{(k-1)},..,\hat{\underline{h}}_u^{(k-1)},..,\hat{\underline{h}}_U^{(k-1)}$) ermittelt wird.

**17.** Verfahren zur Detektion nach Anspruch 16,
**dadurch gekennzeichnet,**
**dass** das adaptive rekursive Kanalschätzungsverfahren der rekursive Least-Squares-Algorithmus ist.

**18.** Verfahren zur Detektion nach Anspruch 17,
**dadurch gekennzeichnet,**
**dass** zur iterativen Berechnung der Kanalschätzungshypothese $(\hat{\underline{h}}_1^{(k)},..,\hat{\underline{h}}_u^{(k)},..,(\hat{\underline{h}}_U^{(k)})$ für jeden im aktuellen Zeitpunkt $(k)$ ausgewählten Zustand $(S_i)$ ein a-priori-Schätzfehler $(e^{(k/k-1)})$ zwischen der bis zum aktuellen Zeitpunkt $(k)$ empfangenen Datensymbol-Sequenz $(\underline{r}^{(k)})$ und der mit der zum vorhergehenden Zeitpunkt $(k-1)$ für den jeweils vorausgehenden Zustand $(S_i)$ geschätzten Impulsantwort $(\hat{\underline{h}}_1^{(k-1)},..,(\hat{\underline{h}}_u^{(k-1)},..,(\hat{\underline{h}}_U^{(k-1)})$ des Übertragungskanals gewichteten Schätzung $(\hat{\underline{d}}_1^{(k)},..,(\hat{\underline{d}}_u^{(k)},..,(\hat{\underline{d}}_U^{(k)})$ der bis zum aktuellen Zeitpunkt $(k)$ gesendeten Datensymbol-Sequenz $(\underline{d}_1^{(k)},..,\underline{d}_u^{(k)},..,\underline{d}_U^{(k)})$ ermittelt wird.

**19.** Verfahren zur Detektion nach einem der Ansprüche 1 bis 16,
**dadurch gekennzeichnet,**
**dass** die Kanalschätzungshypothese $(\hat{\underline{h}}_1^{(k)},..,\hat{\underline{h}}_u^{(k)},..,\hat{\underline{h}}_U^{(k)})$ im aktuellen Zeitpunkt $(k)$ über ein adaptives Kanalschätzungsverfahren aus der jüngst zurückliegenden Kanalschätzungshypothese $(\hat{\underline{h}}_1^{(k-n)},..,\hat{\underline{h}}_u^{(k-n)},..,\hat{\underline{h}}_U^{(k-n)})$ aus allen in Zeitpunkten $k-n$, $k-2 \cdot n$, $k-3 \cdot n$,.. mit einem konstanten Zeitraster $n$ geschätzten Kanalschätzungshypothesen $(\hat{\underline{h}}_1^{(k-n)},..,\hat{\underline{h}}_u^{(k-n)},..,\hat{\underline{h}}_U^{(k-n)}$, $\hat{\underline{h}}_1^{(k-2n)},..\hat{\underline{h}}_u^{(k-2n)},..,\hat{\underline{h}}_U^{(k-2n)}$, $\hat{\underline{h}}_1^{(k-3n)},..,\hat{\underline{h}}_u^{(k-3n)},..,\hat{\underline{h}}_U^{(k-3n)}$,.. ermittelt wird.

**20.** Verfahren zur Detektion nach einem der Ansprüche 1 bis 16,
**dadurch gekennzeichnet,**
**dass** die Kanalschätzungshypothese $(\hat{\underline{h}}_1^{(k)},..\hat{\underline{h}}_u^{(k)},..,\hat{\underline{h}}_U^{(k)})$ im aktuellen Zeitpunkt $(k)$ über ein adaptives Kanalschätzungsverfahren aus der am Beginn (0) der Übertragung geschätzten Kanalschätzungshypothese $(\hat{\underline{h}}_1^{(0)},..\hat{\underline{h}}_u^{(0)},..,\hat{\underline{h}}_U^{(0)})$ ermittelt wird.

**21.** Entzerrer zur Detektion von mindestens einer zu jeweils einem über jeweils einen zeitveränderlichen Übertragungskanal übertragenen Signal gehörigen gesendeten Datensymbol-Sequenz $(\underline{d}_1^{(k)},..\underline{d}_u^{(k)},..,\underline{d}_U^{(k)})$ aus einer zu einem einzigen Empfangssignal gehörigen empfangenen Datensymbol-Sequenz $(\underline{r}^{(k)})$, bei dem für jeden Zeitpunkt $(k)$ im Wechsel die Impulsantwort $(\underline{h}_1^{(k)},..,\underline{h}_u^{(k)},..,\underline{h}_U^{(k)})$ des jeweiligen Übertragungskanals und das jeweils aktuell gesendete Datensymbol $(d_1(k),..,d_2(k),..,d_U(k))$ geschätzt wird, wobei zur Schätzung des im aktuellen Zeitpunkt $(k)$ jeweils gesendeten Datensymbols $(d_1(k),..,d_2(k),..,d_U(k))$ diejenigen Zustände $(S_i)$ im Zustandsdiagramm ausgewählt werden, deren iterativ berechnete, aus jeweils einer Pfadmetrik $(\tilde{M}^{(k)})$ und einem Erweiterungsterm $(\delta(k))$ bestehende erweiterte Metriken $(\overline{\overline{M}}^{(k)})$ minimal sind, **dadurch gekennzeichnet, dass** sich der Zähler des Erweiterungsterms $(\delta(k))$ einzig aus der Differenz zwischen den in zukünftigen Zeitpunkten $(k+1, k+2, k+3,..)$ empfangenen Datensymbolen $(r(k+1), r(k+2), r(k+3), ..)$ und den mit der zum aktuellen Zeitpunkt $(k)$ geschätzten Impulsantwort $(\hat{\underline{h}}_1^{(k)},..,\hat{\underline{h}}_u^{(k)},..,\hat{\underline{h}}_U^{(k)})$ des jeweiligen Übertragungskanals gewichteten Schätzungen $(\hat{\underline{d}}_1^{(k)},..,\hat{\underline{d}}_u^{(k)},..,\hat{\underline{d}}_U^{(k)})$ der bis zum aktuellen Zeitpunkt $(k)$ jeweils gesendeten Datensymbol-Sequenz $(\underline{d}_1^{(k)},..,\underline{d}_u^{(k)},..,\underline{d}_U^{(k)})$ ergibt.

**22.** Digitales Speichermedium mit elektronisch auslesbaren Steuersignalen, die so mit einem programmierbaren Computer oder digitalen Signalprozessor zusammenwirken können, dass das Verfahren nach einem der Ansprüche 1 bis 20 ausgeführt wird.

**23.** Computerprogramm mit Programmcode-Mitteln, um alle Schritte gemäß einem der Ansprüche 1 bis 20 durchführen zu können, wenn das Programm auf einem Computer oder einem digitalen Signalprozessor ausgeführt wird.

**Claims**

**1.** Method for detecting at least one transmitted data-symbol sequence $(\underline{d}_1^{(k)},..,\underline{d}_u^{(k)},..,\underline{d}_U^{(k)})$ associated in each case with one signal transmitted via respectively one time-variable transmission channel from a received data-symbol sequence $(\underline{r}^{(k)})$ associated with a single received signal, in which the impulse response $(\underline{h}_1^{(k)},..,\underline{h}_u^{(k)},..,\underline{h}_U^{(k)})$ of the respective transmission channel and the respective, currently transmitted data symbol $(\underline{d}_1^{(k)},..,\underline{d}_u^{(k)},..,\underline{d}_U^{(k)})$ is estimated in alternation for every timing point $(k)$, wherein for the estimation of the data symbol $(\underline{d}_1^{(k)},..,\underline{d}_u^{(k)},..,\underline{d}_U^{(k)})$

transmitted in each case at the current timing point ($k$), those states ($S_i$) in the state diagram are selected, of which the iteratively calculated expanded metrics ($\overline{\overline{M}}^{(k)}$) consisting respectively of a path metric ($\widetilde{M}^{(k)}$) and an expansion term ($\delta(k)$) are minimal,

**characterised in that**

the numerator of the expansion term ($\delta(k)$) is obtained solely from the difference between the data symbols ($r(k + 1)$, $r(k + 2)$, $r(k+3)$,..) received at future timing points ($k + 1$, $k + 2$, $k + 3$,..) and the estimates ($\hat{d}_1{}^{(k)}$,..,$\hat{d}_u{}^{(k)}$,..,$\hat{d}_U{}^{(k)}$) of the data-symbol sequence ($\underline{d}_1{}^{(k)}$,..,$\underline{d}_u{}^{(k)}$,..,$\underline{d}_U{}^{(k)}$) transmitted in each case up to the current timing point ($k$) weighted with the impulse response ($\hat{\underline{h}}_1{}^{(k)}$,..,$\hat{\underline{h}}_u{}^{(k)}$,..,$\hat{\underline{h}}_U{}^{(k)}$) of the respective transmission channel estimated at the current timing point (k).

2. Method for detection according to claim 1,
**characterised in that**
the metric ($\widetilde{M}^{(k)}$) of a state ($S_i$) at the current timing point ($k$) is calculated iteratively from the expanded path metric ($\widetilde{M}^{(k-1)}$) of the respectively preceding state ($S_i$) with the addition of a branch metric between the respectively preceding state ($S_i$) at the preceding timing point ($k$ - 1) and the state ($S_i$) at the current timing point ($k$).

3. Method for detection according to claim 2,
**characterised in that**
the branch metric between the respectively preceding state ($S_i$) at the preceding timing point ($k$ - 1) and the state ($S_i$) at the current timing point ($k$) takes into consideration a function of a product ($e^{(k/k-n)} \cdot e^{(k/k-m)}$; $e^{(k/k-n)} \cdot e^{(k/k)}$) from a first a-priori estimation error ($e^{(k/k-n)}$) and a second a-priori estimation error ($e^{(k/k-m)}$) or an a-posteriori estimation error ($e^{(k/k)}$), wherein the first a-priori estimation error ($e^{(k|k-n)}$), the second a-priori estimation error ($e^{(k/k-m)}$) and the a-posteriori estimation error ($e^{(k/k)}$) is determined in each case between the data-symbol sequence ($\underline{r}^{(k)}$) received up to the current timing point ($k$) and the estimate ($\hat{\underline{d}}_1{}^{(k)T} \cdot \hat{\underline{h}}_1{}^{(k)} +..+ \hat{\underline{d}}_u{}^{(k)T} \cdot \hat{\underline{h}}_u{}^{(k)} +..+ \hat{\underline{d}}_U{}^{(k)T} \cdot \hat{\underline{h}}_U{}^{(k)}$) of the data-symbol sequence ($\underline{r}^{(k)}$) received up to the current timing point ($k$).

4. Method for detection according to claim 3,
**characterised in that**
the function is a modulus-forming function.

5. Method for detection according to claim 3,
**characterised in that**
the function is a real-component forming function.

6. Method for detection according to any one of claims 3 to 5,
**characterised in that**
the estimate

$$( \hat{\underline{d}}_1{}^{(k)^T} \cdot \hat{\underline{h}}_1{}^{(k-n)} +..+ \hat{\underline{d}}_u{}^{(k)^T} \cdot \hat{\underline{h}}_u{}^{(k-n)} +..+ \hat{\underline{d}}_U{}^{(k)^T} \cdot \hat{\underline{h}}_U{}^{(k-n)} ,$$

$$\hat{\underline{d}}_1{}^{(k)^T} \cdot \hat{\underline{h}}_1{}^{(k-1)} +..+ \hat{\underline{d}}_u{}^{(k)^T} \cdot \hat{\underline{h}}_u{}^{(k-1)} +..+ \hat{\underline{d}}_U{}^{(k)^T} \cdot \hat{\underline{h}}_U{}^{(k-1)} ;$$

$$\hat{\underline{d}}_1{}^{(k)^T} \cdot \hat{\underline{h}}_1{}^{(k-m)} +..+ \hat{\underline{d}}_u{}^{(k)^T} \cdot \hat{\underline{h}}_u{}^{(k-m)} +..+ \hat{\underline{d}}_U{}^{(k)^T} \cdot \hat{\underline{h}}_U{}^{(k-m)} ;$$

$$\hat{\underline{d}}_1{}^{(k)^T} \cdot \hat{\underline{h}}_1{}^{(k)} +..+ \hat{\underline{d}}_u{}^{(k)^T} \cdot \hat{\underline{h}}_u{}^{(k)} +..+ \hat{\underline{d}}_U{}^{(k)^T} \cdot \hat{\underline{h}}_U{}^{(k)} )$$

of the data-symbol sequence ($\underline{r}^{(k)}$) received up to the current timing point ($k$) of the first a-priori estimation error ($e^{(k|k-n)}$, $e^{(k|k-1)}$, of the second a-priori estimation error ($e^{(k|k-m)}$) and of the a-posteriori estimation error ($e^{(k|k)}$) is determined from the estimate $(\hat{\underline{d}}_1^{(k)},..,\hat{\underline{d}}_u^{(k)},..,\hat{\underline{d}}_U^{(k)})$ of the data-symbol sequence $(\underline{d}_1^{(k)},..,\underline{d}_u^{(k)},..,\underline{d}_U^{(k)})$ transmitted up to the current timing point ($k$) weighted with an impulse response $(\hat{\underline{h}}_1^{(k-n)},..,\hat{\underline{h}}_u^{(k-n)},..,\hat{\underline{h}}_U^{(k-n)})$, $(\hat{\underline{h}}_1^{(k-1)},..,\hat{\underline{h}}_u^{(k-1)},..,\hat{\underline{h}}_U^{(k-1)})$; $(\hat{\underline{h}}_1^{(k-m)},..,\hat{\underline{h}}_u^{(k-m)},..,\hat{\underline{h}}_U^{(k-m)})$; $(\hat{\underline{h}}_1^{(k)},..,\hat{\underline{h}}_u^{(k)},..,\hat{\underline{h}}_U^{(k)})$ of the respective transmission channel estimated at a first and respectively second timing point ($k - n,\ k - 1;\ k - m\ ;\ k$).

7. Method for detection according to claim 6,
   **characterised in that**
   the first timing point ($k - n,\ k - 1$) of the first a-priori estimation error ($e^{(k|k-n)}$, $e^{(k|k-1)}$) is a timing point (k-n) preceding the current timing point ($k$) by $n$ timing points, and the second timing point ($k - m$) of the second a-priori estimation error ($e^{(k|k-m)}$) is a timing point ($k - m$) preceding the current timing point ($k$) by $m$ timing points.

8. Method for detection according to any one of claims 1 to 7,
   **characterised in that,**
   in the case of the iteratively calculated metric ($\tilde{M}^{(k)}$), data symbols ($d_1(k),..,d_2(k),..,d_U(k)$) transmitted earlier are weighted more weakly than data symbols ($d_1(k),..,d_2(k),..,d_U(k)$) transmitted later.

9. Method for detection according to any one of claims 1 to 8,
   **characterised in that,**
   for the estimation of the data-symbol sequence $\underline{d}_1^{(k)},..,\underline{d}_u^{(k)},..,\underline{d}_U^{(k)}$ transmitted in each case up to the current timing point ($k$), one path is selected successively from successive states ($S_i$), so long as the expanded path metric ($\overline{\overline{M}}^{(k)}$) of the last-selected state ($S_i$) is smaller than a threshold value, and otherwise, the path is continued iteratively in one of the previously selected states ($S_i$) with an alternative state ($S_i$) or respectively its subsequent states ($S_i$), if their expanded path metrics ($\overline{\overline{M}}^{(k)}$) are smaller than the threshold value.

10. Method for detection according to any one of claims 1 to 8,
    **characterised in that**
    those states ($S_i$) are selected at the current timing point ($k$) which, of all states ($S_i$) at the current timing point ($k$), provide a minimal expanded path metric ($\overline{\overline{M}}^{(k)}$) **.**

11. Method for detection according to any one of claims 1 to 8,
    **characterised in that**
    those states ($S_i$) are selected at the current timing point ($k$), which, of all those states ($S_i$), which each provide a common precursor condition ($S_i$) at the preceding timing point ($k - 1$), provide a minimal expanded path metric ($\overline{\overline{M}}^{(k)}$) at the current timing point (k).

12. Method for detection according to claim 10 or 11,
    **characterised in that,**
    in the case of a large difference in the signal power between lower-power and higher-power signals, only those states ($S_i$) at the current timing point ($k$) are pursued further, which are associated with a number ($M'$) of data-symbol hypotheses in each case with the smallest Euclidean distances relative to the received data symbol ($d_1(k),..,d_u(k),..,d_U(k)$) for every lower-power signal.

13. Method for detection according to claim 12,
    **characterised in that,**
    for the determination of the number ($M'$) of data-symbol hypotheses in each case with the smallest Euclidean distances relative to the received data symbol ($d_1(k),..,d_u(k),..,d_U(k)$), for every lower-power signal, the ratio of the measured signal power of the higher-power signal(s) relative to the measured signal power of the lower power signal(s) is determined at the timing point ($k$).

14. Method for detection according to claim 13,
    **characterised in that**

the number ($M'$) is specified in inverse proportion to the ratio of the measured signal power of the higher-power signal(s) relative to the measured signal power of the lower-power signals.

**15.** Method for detection according to claim 13 or 14,
**characterised in that**
the signal power of a signal transmitted via a transmission channel is measured by determining the signal power of the channel-impulse response associated with the respective transmission channel.

**16.** Method for detection according to any one of claims 1 to 15,
**characterised in that**
the channel-estimation hypothesis ($\hat{\underline{h}}_1^{(k)},..,\hat{\underline{h}}_u^{(k)},..,\hat{\underline{h}}_U^{(k)}$) at the current timing point ($k$) is determined iteratively via an adaptive, recursive channel-estimation method from the channel-estimation hypothesis ($\hat{\underline{h}}_1^{(k-1)},..,\hat{\underline{h}}_u^{(k-1)},..,\hat{\underline{h}}_U^{(k-1)}$) estimated at the preceding timing point ($k$ - 1).

**17.** Method for detection according to claim 16,
**characterised in that**
the adaptive, recursive channel-estimation method is the recursive least-squares algorithm.

**18.** Method for detection according to claim 17,
**characterised in that,**
for the iterative calculation of the channel-estimation hypothesis ($\hat{\underline{h}}_1^{(k)},..,\hat{\underline{h}}_u^{(k)},..,\hat{\underline{h}}_U^{(k)}$), an a-priori estimation error ($e^{(k/k-1)}$) between the data-symbol sequence ($\underline{r}^{(k)}$) received up to the current timing point ($k$) and the estimate ($\hat{\underline{d}}_1^{(k)},..,\hat{\underline{d}}_u^{(k)},..,\hat{\underline{d}}_U^{(k)}$) of the data-symbol sequence ($\underline{d}_1^{(k)},..,\underline{d}_u^{(k)},..,\underline{d}_U^{(k)}$) transmitted up to the current timing point ($k$) weighted with the impulse response ($\hat{\underline{h}}_1^{(k-1)},..,\hat{\underline{h}}_u^{(k-1)},..,\hat{\underline{h}}_U^{(k-1)}$) of the transmission channel estimated at the preceding timing point ($k$ - 1) for the respectively preceding state ($S_i$) is determined for every state ($S_i$) selected at the current timing point ($k$).

**19.** Method for detection according to any one of claims 1 to 16,
**characterised in that**
the channel estimation hypothesis ($\hat{\underline{h}}_1^{(k)},..,\hat{\underline{h}}_u^{(k)},..,\hat{\underline{h}}_U^{(k)}$) at the current timing point ($k$) is determined via an adaptive channel-estimation method from the most recently past channel-estimation hypothesis ($\hat{\underline{h}}_1^{(k-n)},..,\hat{\underline{h}}_u^{(k-n)},..,\hat{\underline{h}}_U^{(k-n)}$) of all of the channel-estimation hypotheses ($\hat{\underline{h}}_1^{(k-n)},..,\underline{h}_u^{(k-n)},..,\underline{h}_U^{(k-n)}$), ($\hat{\underline{h}}_1^{(k-2n)},..,\underline{h}_u^{(k-2n)},..,\underline{h}_U^{(k-2n)}$), ($\hat{\underline{h}}_1^{(k-3n)},..,\underline{h}_u^{(k-3n)},..,\underline{h}_U^{(k-3n)}$),.. estimated at timing points $k$ - $n$, $k$ - 2 · $n$, $k$ - 3 · $n$,.. with a constant time raster $n$.

**20.** Method for detection according to any one of claims 1 to 16,
**characterised in that**
the channel-estimation hypothesis ($\hat{\underline{h}}_1^{(k)},..,\hat{\underline{h}}_u^{(k)},..,\hat{\underline{h}}_U^{(k)}$) at the current timing point ($k$) is determined via an adaptive channel-estimation method from the channel-estimation hypothesis ($\hat{\underline{h}}_1^{(0)},..,\hat{\underline{h}}_u^{(0)},..,\hat{\underline{h}}_U^{(0)}$) estimated at the beginning (0) of the transmission.

**21.** Equaliser for the detection of at least one transmitted data-symbol sequence ($\underline{d}_1^{(k)},..,\underline{d}_u^{(k)},..,\underline{d}_U^{(k)}$) associated in each case with one signal transmitted via respectively one time-variable transmission channel from a received data-symbol sequence ($\underline{r}^{(k)}$) associated with a single received signal, in which the impulse response ($\underline{h}_1^{(k)},..,\underline{h}_u^{(k)},..,\underline{h}_U^{(k)}$) of the respective transmission channel and the respective, currently-transmitted data symbol ($d_1(k),..,d_2(k),..,d_U(k)$) is estimated for every timing point ($k$) in alternation, wherein for the estimation of the data symbol ($d_1^{(k)},..,d_u^{(k)},..,d_U^{(k)}$) transmitted at the current timing point ($k$), those states ($S_i$) in the state diagram are selected, of which the iteratively calculated expanded metrics ($\overline{\overline{M}}^{(k)}$) consisting in each case of a path metric ($\tilde{M}^{(k)}$) and an expansion term ($\delta(k)$) are minimal,
**characterised in that**
the numerator of the expansion term ($\delta(k)$) is obtained solely from the difference between the data symbols ($r(k + 1)$, $r(k + 2)$, $r(k + 3)$,..) received at future timing points ($k$ + 1, $k$ + 2,$k$ + 3,..) and the estimates ($\hat{\underline{d}}_1^{(k)},..,\hat{\underline{d}}_u^{(k)},..,\underline{d}_U^{(k)}$) of the data-symbol sequence ($\underline{d}_1^{(k)},..,\underline{d}_u^{(k)},..,\underline{d}_U^{(k)}$) transmitted respectively up to the current timing point ($k$) weighted with the impulse response ($\hat{\underline{h}}_1^{(k)},..,\hat{\underline{h}}_u^{(k)},..,\hat{\underline{h}}_U^{(k)}$) of the respective transmission channel estimated at the current timing point ($k$).

**22.** Digital storage medium with electronically-readable control signals, which can cooperate with a programmable computer or digital signal processor in such a manner that the method according to any one of claims 1 to 20 is executed.

**23.** Computer program with program-code means, in order to implement all of the stages according to any one of claims 1 to 20, when the program is run on a computer or a digital signal processor.

**Revendications**

**1.** Procédé de détection d'au moins une séquence de symboles de données ($\underline{d}_1^{(k)}$,..,$\underline{d}_u^{(k)}$,..,$\underline{d}_U^{(k)}$) envoyée associée à un signal respectif transmis par l'intermédiaire d'un canal de transmission variable au moment respectif à partir d'une séquence de symboles de données ($\underline{r}^{(k)}$) reçue associée à un seul signal de réception, dans lequel, pour chaque moment (k) la réponse d'impulsion ($\underline{h}_1^{(k)}$,..,$\underline{h}_u^{(k)}$,..,$\underline{h}_U^{(k)}$) du canal de transmission respectif et le symbole de données ($d_1(k)$,..,$d_2(k)$,..,$d_U(k)$) envoyé effectivement respectif sont évalués alternativement, dans lequel, en vue de l'évaluation du symbole de données ($d_1(k)$,..,$d_2(k)$,..,$d_U(k)$) envoyé respectif au moment effectif (k), les états ($S_i$) sont choisis dans le diagramme d'état, dont les métriques ($\overline{\overline{M}}^{(k)}$) calculées de façon itérative étendues constituées respectivement d'une métrique de trajet ($\widetilde{M}^{(k)}$) et d'un terme d'expansion ($\delta(k)$) sont minimales, **caractérisé en ce que** l'indice du terme d'expansion ($\delta(k)$) résulte de la différence entre les symboles de données ($r(k+1)$, $r(k+2)$, $r(k+3)$,...) reçus à des moments ultérieurs (k+1, k+2, k+3,...) et les évaluations ($\hat{\underline{d}}_1^{(k)}$,..,$\hat{\underline{d}}_u^{(k)}$,..,$\hat{\underline{d}}_U^{(k)}$) pondérées avec la réponse d'impulsion ($\hat{\underline{h}}_1^{(k)}$,..,$\hat{\underline{h}}_u^{(k)}$,..,$\hat{\underline{h}}_U^{(k)}$) évaluée au moment effectif (k) du canal de transmission respectif de la séquence de symboles de données ($\underline{d}_1^{(k)}$,..,$\underline{d}_u^{(k)}$,..,$\underline{d}_U^{(k)}$) envoyée respective jusqu'au moment effectif (k).

**2.** Procédé de détection selon la revendication 1, **caractérisé en ce que** la métrique ($\widetilde{M}^{(k)}$) d'un état ($S_i$) au moment effectif (k) est calculée de façon itérative à partir de la métrique de trajet ($\widetilde{M}^{(k-1)}$) étendue de l'état ($S_i$) précédent respectif plus une métrique de branche entre l'état précédent respectif ($S_i$) au moment précédent (k-1) et l'état ($S_i$) au moment effectif (k).

**3.** Procédé de détection selon la revendication 2, **caractérisé en ce que** la métrique de branche entre l'état précédent respectif ($S_i$) au moment précédent (k-1) et l'état ($S_i$) au moment effectif (k) prend en compte une fonction d'un produit ($e^{(k|k-n)} \cdot e^{(k|k-m)}$; $e^{(k|k-n)} \cdot e^{(k|k)}$) à partir d'une première erreur d'évaluation a priori ($e^{(k|k-n)}$) et d'une seconde erreur d'évaluation a priori ($e^{(k|k-m)}$) ou d'une erreur d'évaluation a posteriori ($e^{(k|k)}$), dans lequel la première erreur d'évaluation a priori ($e^{(k|k-n)}$), la seconde erreur d'évaluation a priori ($e^{(k|k-m)}$) et l'erreur d'évaluation a posteriori ($e^{(k|k)}$) est recherchée respectivement entre la séquence de symboles de données ($\underline{r}^{(k)}$) reçue au moment effectif (k) et l'évaluation ($\hat{\underline{d}}_1^{(k)r} \cdot \hat{\underline{h}}_1^{(k)} + .. + \hat{\underline{d}}_u^{(k)r} \cdot \hat{\underline{h}}_u^{(k)} + ... + \hat{\underline{d}}_U^{(k)r} \cdot \hat{\underline{h}}_U^{(k)}$) de la séquence de symboles de données ($\underline{r}^{(k)}$) reçue au moment effectif (k).

**4.** Procédé de détection selon la revendication 3, **caractérisé en ce que** la fonction est une fonction de formation de valeur.

**5.** Procédé de détection selon la revendication 3, **caractérisé en ce que** la fonction est une fonction de formation de partie réelle.

**6.** Procédé de détection selon l'une des revendications 3 à 5, **caractérisé en ce que** l'évaluation

$$(\hat{\underline{d}}_1^{(k)'} \cdot \hat{\underline{h}}_1^{(k-n)} + .. + \hat{\underline{d}}_u^{(k)'} \cdot \hat{\underline{h}}_u^{(k-n)} + .. + \hat{\underline{d}}_U^{(k)'} \cdot \hat{\underline{h}}_U^{(k-n)},$$

$$\hat{\underline{d}}_1^{(k)'} \cdot \hat{\underline{h}}_1^{(k-1)} + .. + \hat{\underline{d}}_u^{(k)'} \cdot \hat{\underline{h}}_u^{(k-1)} + .. + \hat{\underline{d}}_U^{(k)'} \cdot \hat{\underline{h}}_U^{(k-1)};$$

$$\underline{\hat{d}}_1^{(k)^r} \cdot \underline{\hat{h}}_1^{(k-m)} + .. + \underline{\hat{d}}_u^{(k)^r} \cdot \underline{\hat{h}}_u^{(k-m)} + .. + \underline{\hat{d}}_U^{(k)^r} \cdot \underline{\hat{h}}_U^{(k-m)} ;$$

$$\underline{\hat{d}}_1^{(k)^r} \cdot \underline{\hat{h}}_1^{(k)} + .. + \underline{\hat{d}}_u^{(k)^r} \cdot \underline{\hat{h}}_u^{(k)} + .. + \underline{\hat{d}}_U^{(k)^r} \cdot \underline{\hat{h}}_U^{(k)} )$$

**7.** Procédé de détection selon la revendication 6, **caractérisé en ce que**
le premier moment (k-n, k-1) de la première erreur d'évaluation a priori ($e^{(k|k-n)}$, $e^{(k|k-1)}$) est un moment (k-n) précédant de n moments au moment effectif (k) et le second moment (k-m) de la seconde erreur d'évaluation a priori ($e^{(k|k-m)}$) est un moment (k-m) précédant de m moments au moment effectif (k).

**8.** Procédé de détection selon l'une des revendications 1 à 7, **caractérisé en ce que**
dans le cas de la métrique ($\tilde{M}^{(k)}$) calculée de façon itérative, des symboles de données ($d_1(k),...,d_2(k),...d_U(k)$) envoyés plus tôt sont pondérés plus faiblement que les symboles de données ($d_1(k),...,d_2(k),...d_U(k)$) envoyés plus tard.

**9.** Procédé de détection selon l'une des revendications 1 à 8, **caractérisé en ce que**
en vue de l'évaluation de la séquence des symboles de données ($\underline{d}_1^{(k)},...,\underline{d}_u^{(k)},...,\underline{d}_U^{(k)}$) envoyée respective au moment effectif (k), un trajet est sélectionné par la suite à partir des états se suivant ($S_i$), tant que la métrique de trajet étendue ($\overline{\overline{M}}^{(k)}$) de l'état sélectionné en dernier ($S_i$) est inférieure à une valeur de ce seuil, et sinon le trajet est poursuivi de façon itérative dans l'un des états sélectionnés préalablement ($S_i$) avec un état alternatif ($S_i$) ou ses états le suivant ($S_i$), au cas où leurs métriques de trajet étendues ($\overline{\overline{M}}^{(k)}$) sont inférieures à la valeur de seuil.

**10.** Procédé de détection selon l'une des revendications 1 à 8, **caractérisé en ce que**
sont sélectionnés au moment effectif (k) les états ($S_i$), qui présentent parmi tous les états ($S_i$) une métrique de trajet étendue minimale ($\overline{\overline{M}}^{(k)}$) au moment effectif (k).

**11.** Procédé de détection selon l'une des revendications 1 à 8, **caractérisé en ce que**
sont sélectionnés au moment effectif (k) les états ($S_i$), qui présentent une métrique de trajet étendue minimale ($\overline{\overline{M}}^{(k)}$) parmi tous les états ($S_i$) qui présentent un état de prédécesseur commun ($S_i$) au moment précédent (k-1).

**12.** Procédé de détection selon la revendication 10 ou 11, **caractérisé en ce que**
en cas de grande différence dans la capacité de signal entre des signaux très faibles et des signaux très forts, seuls sont poursuivis les états ($S_i$) au moment effectif (k), qui appartiennent à une pluralité (M') d'hypothèses de symboles de données avec de très petites distances euclidiennes respectives par rapport au symbole de données ($d_1(k),..., d_u(k),...d_U(k)$) reçu pour chaque signal très faible.

**13.** Procédé de détection selon la revendication 12, **caractérisé en ce que**
afin de détecter la pluralité (M') d'hypothèses de symboles de données avec de très petites distances euclidiennes respectives par rapport aux symboles de données reçus ($d_1(k),...,d_u(k),...d_U(k)$) pour chaque signal très faible au moment (k), le rapport de la capacité de signal mesurée du/des signal/signaux très fort/s par rapport à la capacité de signal mesurée du/des signal/signaux très faible/s est recherché.

**14.** Procédé de détection selon la revendication 13, **caractérisé en ce que**,
la pluralité (M') est déterminée de façon inversement proportionnelle par rapport au rapport de la capacité de signal mesurée du/des signal/signaux très fort/s par rapport à la capacité de signal mesurée du/des signal/signaux très faible/s.

**15.** Procédé de détection selon la revendication 13 ou 14, **caractérisé en ce que**
la capacité de signal d'un signal transmis par l'intermédiaire d'un canal de transmission est mesurée grâce à la détection de la capacité de signal de la réponse d'impulsion de canal associée au canal de transmission respectif.

**16.** Procédé de détection selon l'une des revendications 1 à 15, **caractérisé en ce que**
l'hypothèse d'évaluation de canal $(\hat{\underline{h}}_1{}^{(k)},..,\hat{\underline{h}}_u{}^{(k)},..,\hat{\underline{h}}_U{}^{(k)})$ au moment effectif (k) est recherchée de façon itérative par l'intermédiaire d'un procédé d'évaluation de canal récursif adaptatif à partir d'une hypothèse d'évaluation de canal $(\hat{\underline{h}}_1{}^{(k-1)},..,\hat{\underline{h}}_u{}^{(k-1)},..,\hat{\underline{h}}_U{}^{(k-1)})$ évaluée au moment précédent (k-1).

**17.** Procédé de détection selon la revendication 16, **caractérisé en ce que**
le procédé d'évaluation de canal récursif adaptatif est l'algorithme des moindres carrés récursif.

**18.** Procédé de détection selon la revendication 17, **caractérisé en ce que**
en vue du calcul itératif de l'hypothèse d'évaluation de canal $(\hat{\underline{h}}_1{}^{(k)},..,\hat{\underline{h}}_u{}^{(k)},..,\hat{\underline{h}}_U{}^{(k)})$ pour chaque état $(S_i)$ sélectionné au moment effectif (k), une erreur d'évaluation a priori $(e^{(k|k-1)})$ entre la séquence de symboles de données $(\underline{r}^{(k)})$ reçue jusqu'au moment effectif (k) et l'évaluation $(\hat{\underline{d}}_1{}^{(k)},..,\hat{\underline{d}}_u{}^{(k)},..,\hat{\underline{d}}_U{}^{(k)})$ pondérée par la réponse d'impulsion $(\hat{\underline{h}}_1{}^{(k-1)},..,\hat{\underline{h}}_u{}^{(k-1)},..,\hat{\underline{h}}_U{}^{(k-1)})$ évaluée au moment précédent (k-1) pour l'état précédent respectif $(S_i)$ du canal de transmission de la séquence de symboles de données $(\underline{d}_1{}^{(k)},..,\underline{d}_u{}^{(k)},..,\underline{d}_U{}^{(k)})$ envoyée jusqu'au moment effectif (k) est recherchée.

**19.** Procédé de détection selon l'une des revendications 1 à 16, **caractérisé en ce que**
l'hypothèse d'évaluation de canal $(\hat{\underline{h}}_1{}^{(k)},..,\hat{\underline{h}}_u{}^{(k)},..,\hat{\underline{h}}_U{}^{(k)})$ au moment effectif (k) est recherchée par l'intermédiaire d'un procédé d'évaluation de canal adaptatif à partir de la toute dernière hypothèse d'évaluation de canal $(\hat{\underline{h}}_1{}^{(k-n)},..,\hat{\underline{h}}_u{}^{(k-n)},..,\hat{\underline{h}}_U{}^{(k-n)})$ parmi toutes les hypothèses d'évaluation de canal $(\hat{\underline{h}}_1{}^{(k-n)},..,\hat{\underline{h}}_u{}^{(k-n)},..,\hat{\underline{h}}_U{}^{(k-n)}, \hat{\underline{h}}_1{}^{(k-2n)},..,\hat{\underline{h}}_u{}^{(k-2n)},..,\hat{\underline{h}}_U{}^{(k-2n)}, \hat{\underline{h}}_1{}^{(k-3n)},..,\hat{\underline{h}}_u{}^{(k-3n)},..,\hat{\underline{h}}_U{}^{(k-3n)},...$ évaluées avec une période temporelle constante n aux moments k-n, k-2·n, k-3·n,... .

**20.** Procédé de détection selon l'une des revendications 1 à 16, **caractérisé en ce que**
l'hypothèse d'évaluation de canal $(\hat{\underline{h}}_1{}^{(k)},..,\hat{\underline{h}}_u{}^{(k)},..,\hat{\underline{h}}_U{}^{(k)})$ au moment effectif (k) est recherchée par l'intermédiaire d'un procédé d'évaluation de canal adaptatif à partir de l'hypothèse d'évaluation de canal $(\hat{\underline{h}}_1{}^{(0)},..,\hat{\underline{h}}_u{}^{(0)},..,\hat{\underline{h}}_U{}^{(0)})$ évaluée au début (0) de la transmission.

**21.** Égaliseur pour la détection d'au moins une séquence de symboles de données $(\underline{d}_1{}^{(k)},..,\underline{d}_u{}^{(k)},..,\underline{d}_U{}^{(k)})$ envoyée associée à un signal respectif transmis par l'intermédiaire d'un canal de transmission variable au moment respectif à partir d'une séquence de symboles de données $(\underline{r}^{(k)})$ reçue associée à un seul signal de réception, dans lequel, pour chaque moment (k), la réponse d'impulsion $(\underline{h}_1{}^{(k)},..,\underline{h}_u{}^{(k)},..,\underline{h}_U{}^{(k)})$ du canal de transmission respectif et le symbole de données $(d_1(k),...,d_2(k),...d_U(k))$ effectivement envoyé respectif sont évalués alternativement, dans lequel, en vue de l'évaluation du symbole de données $(d_1(k),...,d_2(k),...d_U(k))$ envoyé respectif au moment effectif (k), sont sélectionnés dans le diagramme d'état les états $(S_i)$, dont les métriques $(\overline{\overline{M}}^{(k)})$ étendues constituées respectivement d'une métrique de trajet $(\tilde{M}^{(k)})$ et d'un terme d'expansion $(\delta(k))$ calculées de façon itérative sont minimales, **caractérisé en ce que** l'indice du terme d'expansion $(\delta(k))$ résulte seulement de la différence entre les symboles de données $(r(k+1), r(k+2), r(k+3),...)$ reçus aux moments ultérieurs $(k+1, k+2, k+3,...)$ et les évaluations $(\hat{\underline{d}}_1{}^{(k)},..,\hat{\underline{d}}_u{}^{(k)},..,\hat{\underline{d}}_U{}^{(k)})$ pondérées par la réponse d'impulsion $(\hat{\underline{h}}_1{}^{(k)},..,\hat{\underline{h}}_u{}^{(k)},..,\hat{\underline{h}}_U{}^{(k)})$ évaluée au moment effectif (k) du canal de transmission respectif de la séquence de symboles de données $(\underline{d}_1{}^{(k)},..,\underline{d}_u{}^{(k)},..,\underline{d}_U{}^{(k)})$ envoyée respective jusqu'au moment effectif (k).

**22.** Support de mémoire numérique comportant des signaux de commande pouvant être lus électroniquement, qui peuvent fonctionner avec un ordinateur pouvant être programmé ou un processeur de signal numérique, de sorte que le procédé selon l'une des revendications 1 à 20 est effectué.

**23.** Programme informatique comportant des moyens de code de programme, pour pouvoir effectuer toutes les étapes selon l'une des revendications 1 à 20, lorsque le programme est exécuté sur un ordinateur ou un processeur de signal numérique.

Fig. 1

Fig. 2

$$\begin{bmatrix} r(L_t) & \cdots & r(k-2) & r(k-1) & r(k) & \bigg| & r(k+1) & r(k+2) \end{bmatrix}$$

$$\begin{bmatrix} \begin{array}{cccc} d_1(L_t)\cdot\hat{h}_1(0) & d_1(k-2)\cdot\hat{h}_1(0)\, d_1(k-1)\cdot\hat{h}_1(0) & d_1(k)\cdot\hat{h}_1(0) \\ + & + \quad + & + \\ d_1(L_t-1)\cdot\hat{h}_1(1) \cdots d_1(k-3)\cdot\hat{h}_1(1)\, d_1(k-2)\cdot\hat{h}_1(1)\, d_1(k-1)\cdot\hat{h}_1(1) \\ + & + \quad + \quad + \\ d_1(L_t-2)\cdot\hat{h}_1(2) & d_1(k-4)\cdot\hat{h}_1(2)\, d_1(k-3)\cdot\hat{h}_1(2)\, d_1(k-2)\cdot\hat{h}_1(2) \\ + & + \quad + \quad + \\ d_2(L_t)\cdot\hat{h}_2(0) & d_2(k-1)\cdot\hat{h}_2(0)\, d_2(k-1)\cdot\hat{h}_2(0) & d_2(k)\cdot\hat{h}_2(0) \\ + & + \quad + & + \\ d_2(L_t-1)\cdot\hat{h}_2(1) & d_2(k-2)\cdot\hat{h}_2(1)\, d_2(k-2)\cdot\hat{h}_2(1)\, d_2(k-1)\cdot\hat{h}_2(1) \end{array} & \bigg| & \begin{array}{cc} ?\cdot\hat{h}_1(0) & ?\cdot\hat{h}_1(0) \\ + & + \\ d_1(k)\cdot\hat{h}_1(1) & ?\cdot\hat{h}_1(1) \\ + & + \\ d_1(k-1)\cdot\hat{h}_1(2) & d_1(k)\cdot\hat{h}_1(2) \\ + & + \\ ?\cdot\hat{h}_2(0) & ?\cdot\hat{h}_2(0) \\ + & + \\ d_2(k)\cdot\hat{h}_2(1) & ?\cdot\hat{h}_2(1) \end{array} \end{bmatrix}$$

$$\longrightarrow \tilde{M}(k) \qquad\qquad\qquad \longrightarrow \delta(k)$$

**Fig. 3**

**Fig. 4**

Start

Erstkanalschätzung der Kanalimpulsantworten der Übertragungskanäle — S10

Initialisierung der Komponenten der geschätzten Datensymbol-Sequenzen $\hat{\underline{d}}_u^{(k)}$ in negativen Zeitpunkten k mit Wert 0 und der Prädiktionsfehler-Korrelationsmatrix $K^{(k)}$ zum Zeitpunkt K=0 mit konstantem Faktor $\gamma \cdot L_k$ oder mit Werten der Vorabschätzung der Kanalimpulsantworten — S20

Berechnung der a-priori-Schätzfehler $e^{(k|k-1)}$ und der a-posteriori-Schätzfehler $e^{(k|k)}$ aus dem empfangenen $r(k)$, der geschätzten Datensymbol-Sequenzen $\hat{\underline{d}}_u^{(k-1)}$der Schätzwerte $\hat{h}_u^{(k)}, \hat{h}_u^{(k-1)}, \hat{h}_u^{(k-2)}$ usw. d. Kanalimpulsantworten u. aller möglichen Datensymbole $\hat{\underline{d}}_u^{(k)}$ — S30

iterative Berechnung der Metrik $\tilde{M}^{(k)}$ mittels a-priori-u.a-posteriori Schätzfehler $e^{(k|k-1)}, e^{(k|k)}$ — S40

Berechnung der erweiterten Metrik $\bar{\bar{M}}^{(k)}$ aus iterativ berechneter Metrik $\tilde{M}^{(k)}$ u. Erweiterungsterm $\delta(k)$ — S50

Schätzung der Datensymbole $\hat{\underline{d}}_u^{(k)}$ aus minimaler erweiterter Metrik $\bar{\bar{M}}^{(k)}$ mittels Deepth-first oder Breadth-first-Verfahrens — S60

Berechnung der Kalman-Verstärkung $g^{(k)}$ mittels geschätzter Datensymbol-Sequenzen $\hat{\underline{d}}_u^{(k)}$, iterative Berechnung der Kanalschätzung $\hat{\underline{h}}^{(k)}$ und der Prädiktionsfehler-Korrelationsmatrix $K^{(k)}$ auf Basis der Kalman-Verstärkung $g^{(k)}$ d.a-priori-Schätzfehlers $e^{(k|k-1)}$ u.d. geschätzten Datensymbol-Sequenzen $\hat{\underline{d}}_u^{(k)}$ — S70

S80
Datensymbol-Sequenz-Schätzung zu Ende ?
Ja        Nein

Ende

Abwarten des nöchsten Zeitpunkts k+1

Fig. 5

Fig.6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006029464

**In der Beschreibung aufgeführte Nicht-Patentliteratur**

- **Kammeyer, K.D.** Nachrichtenübertragung. Teubner-Verlag, 1996, 554-555
- **Träger, J.** Kombinierte Kanalschätzung und Dekodierung für Mobilfunkkanäle. Shaker-Verlag, 1993
- **Kammeyer, K.D.** Nachrichtenübertragung. Teubner-Verlag, 1996, 729-730